# EUROPEAN PATENT SPECIFICATION

(11) **EP 4 266 248 B1**
(45) Date of publication and mention of the grant of the patent: **14.10.2026**
(21) Application number: 22919267.9
(22) Date of filing: 10.08.2022
(51) Int. Cl.: G06T 7/33

(54) **PELVIS REGISTRATION METHOD, APPARATUS, COMPUTER READABLE STORAGE MEDIUM, AND PROCESSOR**
VERFAHREN UND VORRICHTUNG ZUR BECKENREGISTRIERUNG, COMPUTERLESBARES SPEICHERMEDIUM UND PROZESSOR
PROCÉDÉ D'ENREGISTREMENT DE BASSIN, APPAREIL, SUPPORT DE STOCKAGE LISIBLE PAR ORDINATEUR ET PROCESSEUR

(30) Priority: 01.03.2022 CN 202210189357
(43) Date of publication of application: 25.10.2023
(73) Proprietor: Beijing Yidianlingdong Technology Co., Ltd., Beijing 102200 (CN)
(72) Inventor: LI, Chao, Beijing 102200 (CN)
(74) Representative: Novagraaf Group
(86) International application number: PCT/CN2022/111517
(87) International publication number: WO 2023/165092

(56) References cited:
- CN-A- 113 066 109
- CN-A- 113 066 109
- CN-A- 113 077 498
- CN-A- 113 077 499
- CN-A- 113 077 499
- CN-A- 114 332 076
- CN-A- 114 332 076
- US-A1- 2021 177 621
- US-A1- 2021 256 716
- BESL PAUL J ET AL: "A Method for Registration of 3D Shapes", IEEE TRANSACTIONS ON PATTERN ANALYSIS AND MACHINE INTELLIGENCE, 1 February 1992 (1992-02-01), pages 239 - 256, XP093177409, Retrieved from the Internet <URL:http://graphics.stanford.edu/courses/cs164-10-spring/Handouts/paper_icp.pdf>
- LI LEIHUI ET AL: "A Tutorial Review on Point Cloud Registrations: Principle, Classification, Comparison, and Technology Challenges", vol. 2021, 29 July 2021 (2021-07-29), CH, pages 1 - 32, XP055948517, ISSN: 1024-123X, Retrieved from the Internet <URL:https://downloads.hindawi.com/journals/mpe/2021/9953910.pdf> DOI: 10.1155/2021/9953910

## Description

### Cross-Reference to Related Application

The disclosure claims the benefit of priority to Chinese Patent Application No. 202210189357.3, filed with the China National Intellectual Property Administration on March 1, 2022 and entitled "Method and device for pelvic registration, computer-readable storage medium and processor",

### Technical Field

The disclosure relates to the technical field of pelvic registration, and particularly relates to a method and device for pelvic registration, a computer-readable storage medium and a processor.

### Background

Medical surgical robot vision navigation is generally used in applications requiring high precision and accuracy. In orthopedic arthroplasty and other robot-assisted or fully autonomous surgery, pelvic registration is one of the links having a relatively significant impact on accuracy of the surgery, especially in hip arthroplasty. During the surgery, an actual bone of a patient is registered with a corresponding virtual or computer bone model, so as to associate a pose of an actual physical bone with the virtual bone model. The pose of the bone includes a position and a rotational orientation of the bone. In this way, actual operation by a doctor on a physiological bone of the patient during the surgery can be accurately guided through preoperative planning on the virtual bone model, thereby reducing a surgical risk. Due to a complex geometry of the pelvis, especially a spherical concave structure of an acetabulum, three-dimensional point cloud registration of the pelvis during the surgery is challenging. Although some methods for patient pelvic registration are available in the art, a registration method which can reduce registration time and guarantee registration accuracy improvement is required in the art.

On account of its own features and a constraint of an objective function, a traditional common iterative closest point (ICP) algorithm is often trapped in a local optimal solution but loses an optimal solution because of influences caused by noise data and bad point pairs on information. Thus, under a complex intraoperative working condition, a registration result of a point set poor in point collection quality is likely to deviate considerably. Moreover, registration failure not only imposes a heavy psychological burden on a surgeon in an intraoperative high-pressure environment, but also causes hidden dangers to guidance of surgical precision by a system, which leads to surgical failure and even accidents.

Therefore, it is required in the art to eliminate or reduce influences of noise and bad point pair data on a registration algorithm, get rid of local optimization during computation through the ICP algorithm as much as possible to obtain an optimal solution, and optimize the ICP algorithm for intraoperative pelvic registration. A relevant technique is disclosed in US2021/0177621A1.

The above information disclosed in the background art is only intended to enhance understanding of the background art of techniques described herein, and therefore the background art may contain certain information that does not form the prior art known in China to those skilled in the art.

### Summary

A main objective of the disclosure is to provide a method and device for pelvic registration, a computer-readable storage medium and a processor, so as to solve the problem of big error in pelvic registration in the prior art.

An aspect of an example of the disclosure provides a method for pelvic registration. The method includes: a primary registration step is executed, wherein a primary registration model and a primary registration matrix are obtained by registering a three-dimensional model of a pelvis with an actual pelvis according to M first marker points , where the first marker point is any point of the pelvis, at least three first marker points are not located on the same straight line, and M ≥ 3; a secondary registration step is executed, wherein a secondary registration model and a secondary registration matrix are obtained by registering the primary registration model with the actual pelvis according to N second marker points, where the second marker point is any point of the pelvis, and N > M; a point deletion step is executed, wherein second marker points having first registration errors greater than an error threshold are deleted and remaining second marker points are determined as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model; a tertiary registration step is executed, wherein a tertiary registration model and a tertiary registration matrix are obtained by registering the primary registration model with the actual pelvis according to the plurality of third marker points; a first determination step is executed, wherein an optimized registration matrix is determined according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model; and a second determination step is executed, wherein a registration model corresponding to the optimized registration matrix is determined as an optimized registration model.

Alternatively, an optimized registration matrix is determined according to a mean of first registration errors and a mean of second registration errors includes: a first registration error matrix is obtained through an iterative closest point algorithm, where the first registration error matrix includes N first registration errors, and the predetermined point is another second marker point closest to the second marker point; a second registration error matrix is obtained through the iterative closest point algorithm, where the second registration error matrix includes N second registration errors; and an optimized registration error matrix and the optimized registration matrix are determined according to the first registration error matrix and the second registration error matrix, where the optimized registration error matrix is a matrix having a less mean of matrix elements of the first registration error matrix and the second registration error matrix, and the optimized registration matrix is a registration matrix corresponding to the optimized registration error matrix.

Alternatively, an optimized registration matrix is determined according to a mean of first registration errors and a mean of second registration errors includes: in cases that all first target differences are less than or equal to a difference threshold and all second registration errors corresponding to the third marker points are less than or equal to an error threshold, a matrix having a less mean of matrix elements of the first registration error matrix and the second registration error matrix is determined as the optimized registration error matrix, and a matrix corresponding to the optimized registration error matrix in the secondary registration matrix and the tertiary registration matrix is determined as the optimized registration matrix, where the first target difference is a difference between the second registration error corresponding to the third marker point and the second registration error corresponding to the deleted second marker point; and in at least one of cases that any first target difference is greater than the difference threshold and the second registration error corresponding to any third marker point is greater than an error threshold, all third marker points having differences greater than the difference threshold and all third marker points having second registration errors greater than the error threshold are deleted, remaining third marker points are determined as Xth marker points, where X is greater than 3, an X-ary registration model and an X-ary registration matrix are obtained by re-registering the primary registration model with the actual pelvis according to the Xth marker point, an (X-1)th registration error matrix is obtained by executing computation through the iterative closest point algorithm, where the (X-1)th registration error matrix includes a plurality of (X-1)th registration errors, the (X-1)th registration error is a root mean square error of a (2X-3)th distance and a (2X-2)th distance, the (2X-3)th distance is a distance between the Xth marker point and an (X-1)th predetermined point, and the (2X-2)th distance is a distance between a corresponding point of the Xth marker point in the X-ary registration model and a corresponding point of the (X-1)th predetermined point in the X-ary registration model, the point deletion step and the tertiary registration step are repeated until a first case or a second case occurs, where the first case is that all second target differences are less than or equal to the difference threshold and all the (X-1)th registration errors are less than or equal to the error threshold, and the second case is that the quantity of all the deleted points is greater than or equal to a predetermined quantity, a matrix having a minimum mean of matrix elements of the first registration error matrix, the second registration error matrix and all (X-1)th registration error matrices is determined as the optimized registration error matrix, and a matrix corresponding to the optimized registration error matrix in the secondary registration matrix, the tertiary registration matrix and all X-ary registration matrices is determined as the optimized registration matrix, where the second target difference is a difference between the Xth registration error corresponding to the (X-1)th marker point and an (X-2)th registration error corresponding to the (X-1)th deleted marker point.

Alternatively, after a registration model corresponding to the optimized registration matrix is determined as an optimized registration model, the method further includes: a rotation model is obtained by rotating the optimized registration model around a rotation axis by a predetermined angle, where the predetermined angle is any angle from -180° to 180°; the primary registration model is updated to the rotation model; the secondary registration step, the point deletion step, the tertiary registration step, the first determination step and the second determination step are repeated to obtain an optimized registration error matrix and an optimized registration model corresponding to the predetermined angle; and a target rotation angle is determined according to optimized registration error matrices corresponding to a plurality of predetermined angles, where the target rotation angle is the predetermined angle corresponding to the optimized registration error matrix having a minimum mean of matrix elements of the optimized registration error matrices corresponding to the plurality of predetermined angles.

Alternatively, a target rotation angle is determined according to optimized registration error matrices corresponding to a plurality of predetermined angles includes: a preliminary registration model is determined according to the optimized registration error matrices corresponding to -180° and a plurality of first predetermined angles spaced from each other by a first interval angle, where the preliminary registration model is the optimized registration model corresponding to a preferred angle of the optimized registration error matrix having a minimum mean of matrix elements of the optimized registration error matrices corresponding to -180° and the first predetermined angles, a difference between a minimum first predetermined angle and -180° is less than or equal to the first interval angle, and a difference between 180° and a maximum first predetermined angle is less than or equal to the first interval angle; and the target rotation angle is determined according to the optimized registration error matrices corresponding to a minimum angle, a maximum angle and a plurality of second predetermined angles spaced from each other by a second interval angle, where the target rotation angle is the second predetermined angle corresponding to the optimized registration error matrix having a minimum mean of matrix elements of the optimized registration error matrices corresponding to the minimum angle, the maximum angle and the second predetermined angle, the second interval angle is less than the first interval angle, the minimum angle is a difference between the preferred angle and the first interval angle, and the maximum angle is the sum of the preferred angle and the first interval angle.

Alternatively, rotation axes include a first straight line, a second straight line and a third straight line, any two of the first straight line, the second straight line and the third straight line are perpendicular to each other, and the rotation axes correspond to the target rotation angles in a one-to-one correspondence manner.

Alternatively, after the target rotation angle is determined according to the optimized registration error matrices corresponding to a minimum angle, a maximum angle and a plurality of second predetermined angles spaced from each other by a second interval angle, the method further includes: three rotation matrices are determined according to three target rotation angles; three projection transformation matrices are determined according to the three rotation matrices and a target pose matrix, where the target pose matrix is a pose matrix of an acetabulum when an acetabular cup is implanted during preoperative planning; the secondary registration matrix is updated to the projection transformation matrix; the point deletion step, the tertiary registration step, the first determination step and the second determination step are repeated to obtain three optimized registration error matrices and three optimized registration models; and an optimal registration error matrix and an optimal registration model are determined according to the three optimized registration error matrices and the three optimal registration models, where the optimal registration error matrix is a matrix having a minimum mean of matrix elements and a variance of the matrix elements less than a variance threshold of the three optimized registration error matrices, and the optimal registration model is a registration model corresponding to the optimized registration error matrix.

Alternatively, an optimized registration matrix is determined according to a mean of first registration errors and a mean of second registration errors includes: a deviation function is established, where the deviation function is used for computing the sum of a collection error and a point cloud error, the collection error is the sum of registration errors of collection points, the collection point is any one of the first marker point, the second marker point and the third marker point, and the point cloud error is the sum of distances between the registration model and points obtained after points of the actual pelvis are subjected to registration matrix transformation; a first deviation is computed according to the secondary registration model, the secondary registration matrix and the deviation function, where the first deviation is the sum of a first collection error and a first point cloud error, the first collection error is the sum of the first registration errors of the second marker points, and the first point cloud error is the sum of distances between the secondary registration model and points obtained after points of the actual pelvis are subjected to secondary registration matrix transformation; a second deviation is computed according to the tertiary registration model, the tertiary registration matrix and the deviation function, where the second deviation is the sum of a second collection error and a second point cloud error, the second collection error is the sum of the second registration errors of the third marker points, and the second point cloud error is the sum of distances between the tertiary registration model and points obtained after points of the actual pelvis are subjected to tertiary registration matrix transformation; and the optimized registration matrix is determined according to the first deviation and the second deviation, where the optimized registration matrix is a registration matrix corresponding to a less one of the first deviation and the second deviation.

Another aspect of an example of the disclosure further provides a device for pelvic registration. The device includes: a first processing unit configured to execute a primary registration step of registering a three-dimensional model of a pelvis with an actual pelvis according to M first marker points to obtain a primary registration model and a primary registration matrix, where the first marker point is any point of the pelvis, at least three first marker points are not located on the same straight line, and M ≥ 3; a second processing unit configured to execute a secondary registration step of registering the primary registration model with the actual pelvis according to N second marker points to obtain a secondary registration model and a secondary registration matrix, where the second marker point is any point of the pelvis, and N > M; a third processing unit configured to execute a point deletion step of deleting second marker points having first registration errors greater than an error threshold and determining remaining second marker points as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model; a fourth processing unit configured to execute a tertiary registration step of registering the primary registration model with the actual pelvis according to the plurality of third marker points to obtain a tertiary registration model and a tertiary registration matrix; a first determination unit configured to execute a first determination step of determining an optimized registration matrix according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model; and a second determination unit configured to execute a second determination step of determining a registration model corresponding to the optimized registration matrix as an optimized registration model.

Yet another aspect of an example of the disclosure further provides a computer-readable storage medium. The computer-readable storage medium includes a stored program, and the program executes any one of the methods.

Still another aspect of an example of the disclosure further provides a processor. The processor is configured to run a program, and the program executes any one of the methods when run.

In an example of the disclosure, in the method for pelvic registration, firstly, a primary registration step of registering a three-dimensional model of a pelvis with an actual pelvis according to M first marker points to obtain a primary registration model and a primary registration matrix is executed, where the first marker point is any point of the pelvis, at least three first marker points are not located on the same straight line, and M ≥ 3. Then, a secondary registration step of registering the primary registration model with the actual pelvis according to N second marker points to obtain a secondary registration model and a secondary registration matrix is executed, where the second marker point is any point of the pelvis, and N > M. A point deletion step of deleting second marker points having first registration errors greater than an error threshold and determining remaining second marker points as third marker points is executed, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model. A tertiary registration step of registering the primary registration model with the actual pelvis according to the plurality of third marker points to obtain a tertiary registration model and a tertiary registration matrix is executed. A first determination step of determining an optimized registration matrix according to a mean of first registration errors and a mean of second registration errors is executed, where the optimized registration matrix is a registration matrix corresponding to a less one of the mean of the first registration errors and the mean of the second registration errors, the second registration error is a root mean square error of the first distance and a third distance, the third distance is a distance between a corresponding point of the second marker point in the tertiary registration model and a corresponding point of the predetermined point in the tertiary registration model, and the fourth distance is a distance between a corresponding point of the third marker point in the tertiary registration model and a corresponding point of the predetermined point in the tertiary registration model. Finally, a second determination step of determining a registration model corresponding to the optimized registration matrix as an optimized registration model is executed. In the method, after primary registration and secondary registration, tertiary registration is executed by deleting points having big registration errors, a registration error matrix is obtained through computation, a registration matrix and a registration model corresponding to the registration error matrix having a minimum error mean are determined as an optimized registration matrix and an optimized registration model by comparing registration error matrices of secondary registration and tertiary registration, registration accuracy is improved by deleting influences of bad point pairs and noise points on operation, and the problem of big errors of pelvic registration in the prior art is solved.

### Brief Description of the Drawings

Accompanying drawings of the description constitute part of the disclosure and serve to provide further understanding of the disclosure, and illustrative examples of the disclosure and the description of the illustrative examples serve to explain the disclosure and are not to be construed as unduly limiting the disclosure. In the accompanying drawings:
Fig. 1 shows a flow diagram of a method for pelvic registration according to an example of the disclosure; and
Fig. 2 shows a schematic diagram of a device for pelvic registration according to an example of the disclosure.

### Detailed Description of the Embodiments

It should be noted that examples of the disclosure and the features in the examples can be combined with each other without conflict. The disclosure will be described in detail below with reference to accompanying drawings and in combination with examples.

In order to enable those skilled in the art to better understand the solutions of the disclosure, the technical solutions in examples of the disclosure will be described below clearly and comprehensively in combination with accompanying drawings in the examples of the disclosure. Apparently, the examples described are merely some examples rather than all examples. On the basis of examples of the disclosure, all other examples obtained by those of ordinary skill in the art without making inventive efforts should all fall within the scope of protection of the disclosure.

It should be noted that terms "first", "second" and so forth in the description and claims of the disclosure and in the above accompanying drawings are used to distinguish between similar objects and not necessarily to describe a particular order or sequential order. It should be understood that data used in this way can be interchanged where appropriate, so as to conveniently describe examples of the disclosure. Moreover, terms "include", "comprise" and "have" as well as their any variations are intended to cover non-exclusive inclusion, for example, a process, method, system, product or apparatus including a series of steps or units is not required to be limited by those explicitly listed, but can include other steps or units not explicitly listed or inherent to the process, method, product or apparatus.

It should be understood that in the situation that an element (for example, a layer, film, region or substrate) is described as being "on" another element, the element can be directly on another element or an intervening element can be present. Furthermore, in the description and claims, in the situation that an element is described as being "connected" to another element, the element can be "directly connected" to another element or "connected" to another element by means of a third element.

As mentioned in the background art, there is a big errors of pelvic registration in the prior art. In order to solve the above problem, in typical embodiments of the disclosure, a method and device for pelvic registration, a computer-readable storage medium and a processor are provided.

According to an example of the disclosure, a method for pelvic registration is provided.

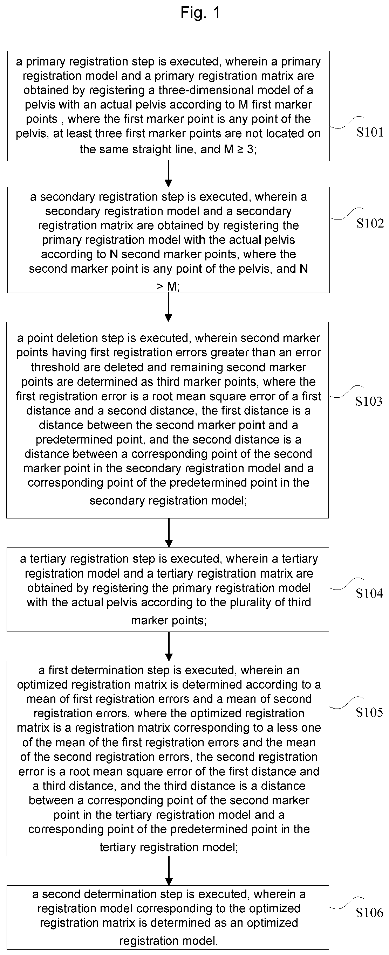

Fig. 1 shows a flow diagram of a method for pelvic registration according to an example of the disclosure. As shown in Fig. 1, the method includes steps as follows:
step S101: a primary registration step is executed, wherein a primary registration model and a primary registration matrix are obtained by registering a three-dimensional model of a pelvis with an actual pelvis according to M first marker points , where the first marker point is any point of the pelvis, at least three first marker points are not located on the same straight line, and M ≥ 3;
step S102: a secondary registration step is executed, wherein a secondary registration model and a secondary registration matrix are obtained by registering the primary registration model with the actual pelvis according to N second marker points, where the second marker point is any point of the pelvis, and N > M;
step S103: a point deletion step is executed, wherein second marker points having first registration errors greater than an error threshold are deleted and remaining second marker points are determined as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model;
step S104: a tertiary registration step is executed, wherein a tertiary registration model and a tertiary registration matrix are obtained by registering the primary registration model with the actual pelvis according to the plurality of third marker points;
step S105: a first determination step is executed, wherein an optimized registration matrix is determined according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model; and
step S106: a second determination step is executed, wherein a registration model corresponding to the optimized registration matrix is determined as an optimized registration model.

In the method for pelvic registration, firstly, a primary registration step is executed, wherein a primary registration model and a primary registration matrix are obtained by registering a three-dimensional model of a pelvis with an actual pelvis according to M first marker points , where the first marker point is any point of the pelvis, at least three first marker points are not located on the same straight line, and M ≥ 3; Then,a secondary registration step is executed, wherein a secondary registration model and a secondary registration matrix are obtained by registering the primary registration model with the actual pelvis according to N second marker points, where the second marker point is any point of the pelvis, and N > M. A point deletion step is executed, wherein second marker points having first registration errors greater than an error threshold are deleted and remaining second marker points are determined as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model. A tertiary registration step is executed, wherein a tertiary registration model and a tertiary registration matrix are obtained by registering the primary registration model with the actual pelvis according to the plurality of third marker points. A first determination step is executed, wherein an optimized registration matrix is determined according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model. Finally, a second determination step is executed, wherein a registration model corresponding to the optimized registration matrix is determined as an optimized registration model. In the method, after primary registration and secondary registration, tertiary registration is executed by deleting points having big registration errors, a registration error matrix is obtained through computation, a registration matrix and a registration model corresponding to the registration error matrix having a minimum error mean are determined as an optimized registration matrix and an optimized registration model by comparing registration error matrices of secondary registration and tertiary registration, registration accuracy is improved by deleting influences of bad point pairs and noise points on operation, and the problem of big errors of pelvic registration in the prior art is solved.

It should be noted that the primary registration step is coarse registration. Generally, 3 - 5 anatomical landmark point locations, for example, an anterior edge of an acetabulum, a posterior edge of the acetabulum, and a lowest edge of a horseshoe fossa, of the acetabulum of a patient during surgery, and point pairs having the same quantity as corresoonding point locations of a virtual reconstructed bone displayed in a system during preoperative planning are selected. A corresponding initial intraoperative and virtual modeling coordinate transformation matrix, that is, primary registration matrix Tc, may be obtained through a coarse registration algorithm such as Landmark. The secondary registration step and the tertiary registration step are fine registration. Generally, 20 - 48 points near the acetabulum, for example, the horseshoe fossa, a facies lunata, a labium externum of the acetabulum and an exterior edge of the acetabulum are collected to form a fine registration point set to be used for correcting errors caused by projection during coarse registration. Registration is carried out through a vtk_ICP algorithm to obtain corresponding secondary registration matrix Ti and tertiary registration matrix Td.

It should be noted that steps shown in the flow diagram of accompanying drawings can be executed in a computer system such as a set of computer-executable instructions, and although a logical order is shown in the flow diagram, in some situations, the steps shown or described can be executed in an order different from that herein.

In an example of the disclosure, an optimized registration matrix is determined according to a mean of first registration errors and a mean of second registration errors includes: a first registration error matrix is obtained through an iterative closest point algorithm, where the first registration error matrix includes N first registration errors, and the predetermined point is another second marker point closest to the second marker point; a second registration error matrix is obtained through the iterative closest point algorithm, where the second registration error matrix includes N second registration errors; and an optimized registration error matrix and the optimized registration matrix are determined according to the first registration error matrix and the second registration error matrix, where the optimized registration error matrix is a matrix having a less mean of matrix elements of the first registration error matrix and the second registration error matrix, and the optimized registration matrix is a registration matrix corresponding to the optimized registration error matrix. Specifically, the second marker point and the predetermined point are projected onto a point cloud corresponding to the secondary registration model through Tc*Ti, that is, coordinates of the corresponding points of the second marker point and the predetermined point may be computed according to coordinates of the second marker point and the predetermined point, so as to compute the first distance and the second distance to obtain the first registration error, and N first registration errors form the first registration error matrix. The second marker point and the predetermined point are projected onto a point cloud corresponding to the tertiary registration model through Tc*Td, that is, coordinates of corresponding points of the second marker point and the predetermined point are computed according to coordinates of the second marker point and the predetermined point, so as to compute a third distance to obtain the second registration error, and N second registration errors form the second registration error matrix. That is, a mean of matrix elements of the first registration error matrix and a mean of matrix elements of the second registration error matrix may be computed, a matrix having a less mean of matrix elements is determined as an optimized registration error matrix, and a registration matrix corresponding to the optimized registration error matrix is determined as the optimized registration matrix.

It should be noted that the error threshold may be taken from a mean, a median, a mode, a maximum value/2 or an (n/3)th value of the N first registration errors, where n/3 is an integer. According to data distribution features and statistical laws, one of the above values is used as an index, the index is compared with a statistical empirical value (for example, 1 mm) of system registration accuracy, scaling is carried out in a proportional interval of [0, 1], and a greater one of the two values is taken as the error threshold for deleted points.

In an example of the disclosure, an optimized registration matrix is determined according to a mean of first registration errors and a mean of second registration errors includes: in cases that all first target differences are less than or equal to a difference threshold and all second registration errors corresponding to the third marker points are less than or equal to an error threshold, a matrix having a less mean of matrix elements of the first registration error matrix and the second registration error matrix is determined as the optimized registration error matrix, and a matrix corresponding to the optimized registration error matrix in the secondary registration matrix and the tertiary registration matrix is determined as the optimized registration matrix, where the first target difference is a difference between the second registration error corresponding to the third marker point and the second registration error corresponding to the deleted second marker point; and in at least one of cases that any first target difference is greater than the difference threshold and the second registration error corresponding to any third marker point is greater than an error threshold, all third marker points having differences greater than the difference threshold and all third marker points having second registration errors greater than the error threshold are deleted, remaining third marker points are determined as Xth marker points, where X is greater than 3, an X-ary registration model and an X-ary registration matrix are obtained by re-registering the primary registration model with the actual pelvis according to the Xth marker point, an (X-1)th registration error matrix is obtained by executing computation through the iterative closest point algorithm, where the (X-1)th registration error matrix includes a plurality of (X-1)th registration errors, the (X-1)th registration error is a root mean square error of a (2X-3)th distance and a (2X-2)th distance, the (2X-3)th distance is a distance between the Xth marker point and an (X-1)th predetermined point, and the (2X-2)th distance is a distance between a corresponding point of the Xth marker point in the X-ary registration model and a corresponding point of the (X-1)th predetermined point in the X-ary registration model, the point deletion step and the tertiary registration step are repeated until a first case or a second case occurs, where the first case is that all second target differences are less than or equal to the difference threshold and all the (X-1)th registration errors are less than or equal to the error threshold, and the second case is that the quantity of all the deleted points is greater than or equal to a predetermined quantity, a matrix having a minimum mean of matrix elements of the first registration error matrix, the second registration error matrix and all (X-1)th registration error matrices is determined as the optimized registration error matrix, and a matrix corresponding to the optimized registration error matrix in the secondary registration matrix, the tertiary registration matrix and all X-ary registration matrices is determined as the optimized registration matrix, where the second target difference is a difference between the Xth registration error corresponding to the (X-1)th marker point and an (X-2)th registration error corresponding to the (X-1)th deleted marker point. Specifically, the third marker points are second marker points not deleted, and in cases that all the first target differences are less than or equal to the difference threshold and the second registration errors corresponding to all the third marker points are less than or equal to the error threshold, it is proved that it is effective to improve registration accuracy by carrying out registration by deleting points through an ICP algorithm. Otherwise, it is indicated that in the second registration error matrix, there is a second registration error of the third marker point greater than a second registration error of a deleted second marker point, and the difference is greater than the difference threshold, or there is a second registration error of the third marker point greater than the error threshold, which proves that it is not effective to improve registration accuracy by carrying out registration by deleting points through an ICP algorithm, and it is required to carry out registration again by deleting points. All third marker points having differences greater than the difference threshold and all third marker points having second registration errors greater than the error threshold are deleted, and remaining third marker points are determined as Xth marker points such that the point deletion step and the tertiary registration step may be repeated until all the second target differences are less than or equal to the difference threshold and all (X-1)th registration errors are less than or equal to the error threshold, or the quantity of all the deleted points is greater than or equal to a predetermined quantity. A matrix having a minimum mean of matrix elements of all the registration error matrices is determined as the optimized registration error matrix, and a matrix corresponding to the optimized registration error matrix in the secondary registration matrix, the tertiary registration matrix, and all X-ary registration matrices is determined as the optimized registration matrix.

It should be noted that in the point deletion step, all third marker points having differences greater than the difference threshold and all third marker points having second registration errors greater than the error threshold are deleted, and remaining third marker points are retained. Alternatively, all third marker points having differences greater than the difference threshold and all second marker points having second registration errors greater than the error threshold are deleted from the second marker points, and remaining second marker points are retained.

In an example of the disclosure, after a registration model corresponding to the optimized registration matrix is determined as an optimized registration model, the method further includes: a rotation model is obtained by rotating the optimized registration model around a rotation axis by a predetermined angle, where the predetermined angle is any angle from -180° to 180°; the primary registration model is updated to the rotation model; the secondary registration step, the point deletion step, the tertiary registration step, the first determination step and the second determination step are repeated to obtain an optimized registration error matrix and an optimized registration model corresponding to the predetermined angle; and a target rotation angle is determined according to optimized registration error matrices corresponding to a plurality of predetermined angles, where the target rotation angle is the predetermined angle corresponding to the optimized registration error matrix having a minimum mean of matrix elements of the optimized registration error matrices corresponding to the plurality of predetermined angles. Specifically, the primary registration model is rotated around a rotation axis to obtain rotation models every predetermined angle from -180° - 180°, the primary registration model is updated to the rotation model, and the secondary registration step, the point deletion step, the tertiary registration step, the first determination step and the second determination step are executed once to obtain a plurality of the optimized registration error matrices. The predetermined angle corresponding to the optimized registration error matrix having a minimum mean of matrix elements is determined as the target rotation angle, and an initial position of a point set to be registered is changed by rotating the registration model around the rotation axis in three-dimensional space. Therefore, the situation that the ICP algorithm for registration used in the current intraoperative pelvic registration is likely to be limited to local optima, such that the algorithm loses an optimal solution and obtains a sub-optimal solution is reduced or avoided, and registration accuracy of intraoperative clinical practice is improved and enhanced.

In an example of the disclosure, a target rotation angle is determined according to optimized registration error matrices corresponding to a plurality of predetermined angles includes: a preliminary registration model is determined according to the optimized registration error matrices corresponding to -180° and a plurality of first predetermined angles spaced from each other by a first interval angle, where the preliminary registration model is the optimized registration model corresponding to a preferred angle of the optimized registration error matrix having a minimum mean of matrix elements of the optimized registration error matrices corresponding to -180° and the first predetermined angles, a difference between a minimum first predetermined angle and -180° is less than or equal to the first interval angle, and a difference between 180° and a maximum first predetermined angle is less than or equal to the first interval angle; and the target rotation angle is determined according to the optimized registration error matrices corresponding to a minimum angle, a maximum angle and a plurality of second predetermined angles spaced from each other by a second interval angle, where the target rotation angle is the second predetermined angle corresponding to the optimized registration error matrix having a minimum mean of matrix elements of the optimized registration error matrices corresponding to the minimum angle, the maximum angle and the second predetermined angle, the second interval angle is less than the first interval angle, the minimum angle is a difference between the preferred angle and the first interval angle, and the maximum angle is the sum of the preferred angle and the first interval angle. Specifically, the primary registration model is rotated around a rotation axis to obtain first rotation models every first predetermined angle corresponding to first interval angle k° from -180° - 180°, the primary registration model is updated to the first rotation model, the secondary registration step, the point deletion step, the tertiary registration step, the first determination step and the second determination step are executed once to obtain a plurality of the optimized registration error matrices, and the first predetermined angle corresponding to the optimized registration error matrix having a minimum mean of matrix elements as preferred angle α. A second rotation model is obtained every second predetermined angle corresponding to second interval angle 1° from minimum angle (α-k)° to maximum angle (α+k)°, the primary registration model is updated to a second rotation model, and the secondary registration step, the point deletion step, the tertiary registration step once, the first determination step and the second determination step are executed to obtain a plurality of optimized registration error matrices. The second predetermined angle corresponding to the optimized registration error matrix having a minimum mean of matrix elements is determined as the target rotation angle, and the target rotation angle is determined by carrying out rotary registration twice, so as to avoid excessive computed angles and reduce a computation quantity.

In an example of the disclosure, rotation axes include a first straight line, a second straight line and a third straight line, any two of the first straight line, the second straight line and the third straight line are perpendicular to each other, and the rotation axes correspond to the target rotation angles in a one-to-one correspondence manner. Specifically, rotation axes include a first straight line, a second straight line and a third straight line, that is, an X axis, a Y axis and a Z axis, the registration model rotates around a coordinate axis in an X-Y-Z coordinate system, and the rotation axes correspond to the target rotation angles in a one-to-one correspondence manner.

In an example of the disclosure, after the target rotation angle is determined according to the **optimized** registration error matrices corresponding to a minimum angle, a maximum angle and a plurality of second predetermined angles spaced from each other by a second interval angle, the method further includes: three rotation matrices are determined according to three target rotation angles; three projection transformation matrices are determined according to the three rotation matrices and a target pose matrix, where the target pose matrix is a pose matrix of an acetabulum when an acetabular cup is implanted during preoperative planning; the secondary registration matrix is updated to the projection transformation matrix; the point deletion step, the tertiary registration step, the first determination step and the second determination step are repeated to obtain three optimized registration error matrices and three optimized registration models; and an optimal registration error matrix and an optimal registration model are determined according to the three optimized registration error matrices and the three optimal registration models, where the optimal registration error matrix is a matrix having a minimum mean of matrix elements and a variance of the matrix elements less than a variance threshold of the three optimized registration error matrices, and the optimal registration model is a registration model corresponding to the optimized registration error matrix. Specifically, the rotation matrix is determined according to the target rotation angle, for example, the target rotation angles corresponding to the X axis, the Y axis and the Z axis are all θ, the rotation matrix ${R}_{x} = \left[\begin{matrix}1 & 0 & 0 & 0 \\ 0 & cos θ & - sin θ & 0 \\ 0 & sin θ & cos θ & 0 \\ 0 & 0 & 0 & 1\end{matrix}\right]$, the rotation matrix ${R}_{y} = \left[\begin{matrix}cos θ & 0 & sin θ & 0 \\ 0 & 1 & 0 & 0 \\ - sin θ & 0 & cos θ & 0 \\ 0 & 0 & 0 & 1\end{matrix}\right]$, the rotation matrix ${R}_{z} = \left[\begin{matrix}cos θ & - sin θ & 0 & 0 \\ sin θ & cos θ & 0 & 0 \\ 0 & 0 & 1 & 0 \\ 0 & 0 & 0 & 1\end{matrix}\right]$, when registration disturbance rotation is carried out, the pose matrix of the acetabulum when the acetabular cup is implanted during preoperative planning is obtained, and the projection transformation matrix is Tf = C*R*_{θ}**C⁻¹, and the secondary registration matrix is updated to the projection transformation matrix; the point deletion step, the tertiary registration step, the first determination step and the second determination step are repeated to obtain three optimized registration error matrices and three optimized registration models, where the optimal registration error matrix is a matrix having a minimum mean of matrix elements and a variance of the matrix elements less than a variance threshold of the three optimized registration error matrices, and the optimal registration model is a registration model corresponding to the optimized registration error matrix.

In an example of the disclosure, an optimized registration matrix is determined according to a mean of first registration errors and a mean of second registration errors includes: a deviation function is established, where the deviation function is used for computing the sum of a collection error and a point cloud error, the collection error is the sum of registration errors of collection points, the collection point is any one of the first marker point, the second marker point and the third marker point, and the point cloud error is the sum of distances between the registration model and points obtained after points of the actual pelvis are subjected to registration matrix transformation; a first deviation is computed according to the secondary registration model, the secondary registration matrix and the deviation function, where the first deviation is the sum of a first collection error and a first point cloud error, the first collection error is the sum of the first registration errors of the second marker points, and the first point cloud error is the sum of distances between the secondary registration model and points obtained after points of the actual pelvis are subjected to secondary registration matrix transformation; a second deviation is computed according to the tertiary registration model, the tertiary registration matrix and the deviation function, where the second deviation is the sum of a second collection error and a second point cloud error, the second collection error is the sum of the second registration errors of the third marker points, and the second point cloud error is the sum of distances between the tertiary registration model and points obtained after points of the actual pelvis are subjected to tertiary registration matrix transformation; and the optimized registration matrix is determined according to the first deviation and the second deviation, where the optimized registration matrix is a registration matrix corresponding to a less one of the first deviation and the second deviation. Specifically, the deviation function is $f \left(T\right) = {\sum }_{i = 1}^{p} w \left({d}_{i}\right) + {\sum }_{j = 1}^{q} dist \left(S, {TQ}_{j}^{S}\right)$, where ${d}_{i} = \left|{P}_{i}^{V}-{TP}_{i}^{S}\right|$, $w \left({d}_{i}\right) = \left\{\begin{matrix}0 & {d}_{i} < min \\ tol * \frac{{d}_{i} - min}{tol - min} & min \leq {d}_{i} < tol \\ {d}_{i} * exp \left({d}_{i}-tol\right) & else\end{matrix}\right.$, T refers to conversion between a coordinate system of an actual pelvis during surgery and a coordinate system of a registration model, p is the quantity of points of registered marker points, q is the quantity of points of a point cloud of a registration model, ${P}_{i}^{V}$ is a corresponding point of a marker point collected on the actual pelvis on the registration model, ${P}_{i}^{S}$ is a marker point collected on the actual pelvis, S is a point cloud of the registration model, ${Q}_{j}^{S}$ is a point on the actual pelvis, and $dist \left(S, {TQ}_{j}^{S}\right)$ is used to compute a distance from projection point ${Q}_{j}^{S}$ to registration model S. A penalty function *ω*(*dᵢ*) is used for computing a distance between point ${P}_{i}^{V}$ in a visible coordinate system of the registration model and corresponding point ${P}_{i}^{S}$ in a coordinate system of an actual pelvis during surgery by adding a linear or exponential penalty term, so as to further optimize a deviation function. Specifically, tol is an error threshold, and min is a minimum value of matrix elements of the registration error matrix. The first deviation is computed through deviation function f(T), so as to determine a registration matrix having a minimum first deviation as the optimized registration matrix, thereby determining the registration model corresponding to the optimized registration matrix as the optimized registration model.

It should be noted that by minimizing deviation function f(T), points having distances less than the error threshold are retained, and a distance error of the points is tolerable. Points having distances greater than the threshold and still carrying certain key information are recalled within a certain range through an exponential function, so as to participate in optimal computation of the deviation function. In combination with the point deletion and rotation methods, the iterative closest point algorithm for registration for intraoperative pelvic registration is optimized and improved. Moreover, the situation that an objective function is likely to be limited to local optima due to influences of local bad point pairs or noise and the ICP algorithm is reduced.

An example of the disclosure further provides a device for pelvic registration, and it should be noted that the device for pelvic registration in an example of the disclosure can be configured to execute the method for pelvic registration provided in an example of the disclosure. The device for pelvic registration provided in an example of the disclosure will be introduced below.

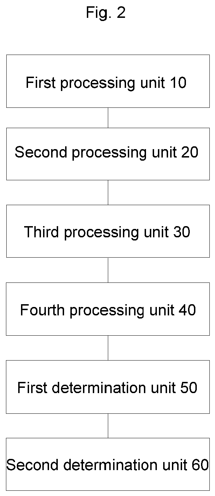

Fig. 2 shows a schematic diagram of a device for pelvic registration according to an example of the disclosure. As shown in Fig. 2, the device includes:
a first processing unit 10 configured to execute a primary registration step of registering a three-dimensional model of a pelvis with an actual pelvis according to M first marker points to obtain a primary registration model and a primary registration matrix, where the first marker point is any point of the pelvis, at least three first marker points are not located on the same straight line, and M ≥ 3;
a second processing unit 20 configured to execute a secondary registration step of registering the primary registration model with the actual pelvis according to N second marker points to obtain a secondary registration model and a secondary registration matrix, where the second marker point is any point of the pelvis, and N > M;
a third processing unit 30 configured to execute a point deletion step of deleting second marker points having first registration errors greater than an error threshold and determining remaining second marker points as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model;
a fourth processing unit 40 configured to execute a tertiary registration step of registering the primary registration model with the actual pelvis according to the plurality of third marker points to obtain a tertiary registration model and a tertiary registration matrix;
a first determination unit 50 configured to execute a first determination step of determining an optimized registration matrix according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model; and
a second determination unit 60 configured to execute a second determination step of determining a registration model corresponding to the optimized registration matrix as an optimized registration model.

In the device for pelvic registration, a first processing unit executes a primary registration step of registering a three-dimensional model of a pelvis with an actual pelvis according to M first marker points to obtain a primary registration model and a primary registration matrix, where the first marker point is any point of the pelvis, at least three first marker points are not located on the same straight line, and M ≥ 3. A second processing unit executes a secondary registration step of registering the primary registration model with the actual pelvis according to N second marker points to obtain a secondary registration model and a secondary registration matrix, where the second marker point is any point of the pelvis, and N > M. A third processing unit executes a point deletion step of deleting second marker points having first registration errors greater than an error threshold and determining remaining second marker points as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model. A fourth processing unit executes a tertiary registration step of registering the primary registration model with the actual pelvis according to the plurality of third marker points to obtain a tertiary registration model and a tertiary registration matrix. A first determination unit executes a first determination step of determining an optimized registration matrix according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, the third distance is a distance between a corresponding point of the second marker point in the tertiary registration model and a corresponding point of the predetermined point in the tertiary registration model, and the fourth distance is a distance between a corresponding point of the third marker point in the tertiary registration model and a corresponding point of the predetermined point in the tertiary registration model. A second determination unit executes a second determination step of determining a registration model corresponding to the optimized registration matrix as an optimized registration model. According to the device, after primary registration and secondary registration, tertiary registration is executed by deleting points having big registration errors, a registration error matrix is obtained through computation, a registration matrix and a registration model corresponding to the registration error matrix having a minimum error mean are determined as an optimized registration matrix and an optimized registration model by comparing registration error matrices of secondary registration and tertiary registration, registration accuracy is improved by deleting influences of bad point pairs and noise points on operation, and the problem of big errors of pelvic registration in the prior art is solved.

It should be noted that the primary registration step is coarse registration. Generally, 3 - 5 anatomical landmark point locations, for example, an anterior edge of an acetabulum, a posterior edge of the acetabulum, and a lowest edge of a horseshoe fossa, of the acetabulum of a patient during surgery, and point pairs having the same quantity as corresoonding point locations of a virtual reconstructed bone displayed in a system during preoperative planning are selected. A corresponding initial intraoperative and virtual modeling coordinate transformation matrix, that is, primary registration matrix Tc, may be obtained through a coarse registration algorithm such as Landmark. The secondary registration step and the tertiary registration step are fine registration. Generally, 20 - 48 points near the acetabulum, for example, the horseshoe fossa, a facies lunata, a labium externum of the acetabulum and an exterior edge of the acetabulum are collected to form a fine registration point set to be used for correcting errors caused by projection during coarse registration. Registration is carried out through a vtk_ICP algorithm to obtain corresponding secondary registration matrix Ti and tertiary registration matrix Td.

In an example of the disclosure, the first determination unit includes a first computation module, a second computation module and a first determination module. The first computation module is configured to obtain a first registration error matrix through an iterative closest point algorithm, where the first registration error matrix includes N first registration errors, and the predetermined point is another second marker point closest to the second marker point. The second computation module is configured to obtain a second registration error matrix through the iterative closest point algorithm, where the second registration error matrix includes N second registration errors. The first determination module is configured to determine an optimized registration error matrix and the optimized registration matrix according to the first registration error matrix and the second registration error matrix, where the optimized registration error matrix is a matrix having a less mean of matrix elements of the first registration error matrix and the second registration error matrix, and the optimized registration matrix is a registration matrix corresponding to the optimized registration error matrix. Specifically, the second marker point and the predetermined point are projected onto a point cloud corresponding to the secondary registration model through Tc*Ti, that is, coordinates of the corresponding points of the second marker point and the predetermined point may be computed according to coordinates of the second marker point and the predetermined point, so as to compute the first distance and the second distance to obtain the first registration error, and N first registration errors form the first registration error matrix. The second marker point and the predetermined point are projected onto a point cloud corresponding to the tertiary registration model through Tc*Td, that is, coordinates of corresponding points of the second marker point and the predetermined point are computed according to coordinates of the second marker point and the predetermined point, so as to compute a third distance to obtain the second registration error, and N second registration errors form the second registration error matrix. That is, a mean of matrix elements of the first registration error matrix and a mean of matrix elements of the second registration error matrix may be computed, a matrix having a less mean of matrix elements is determined as an optimized registration error matrix, and a registration matrix corresponding to the optimized registration error matrix is determined as the optimized registration matrix.

It should be noted that the error threshold may be taken from a mean, a median, a mode, a maximum value/2 or an (n/3)th value of the N first registration errors, where n/3 is an integer. According to data distribution features and statistical laws, one of the above values is used as an index, the index is compared with a statistical empirical value (for example, 1 mm) of system registration accuracy, scaling is carried out in a proportional interval of [0, 1], and a greater one of the two values is taken as the error threshold for deleted points.

In an example of the disclosure, the first determination unit further includes a second determination module and a first processing module. The second determination module is configured to determine, in cases that all first target differences are less than or equal to a difference threshold and all the second registration errors corresponding to the third marker points are less than or equal to an error threshold, a matrix having a less mean of matrix elements of the first registration error matrix and the second registration error matrix as the optimized registration error matrix, and determine a matrix corresponding to the optimized registration error matrix in the secondary registration matrix and the tertiary registration matrix as the optimized registration matrix, where the first target difference is a difference between the second registration error corresponding to the third marker point and the second registration error corresponding to the deleted second marker point. The first processing module is configured to delete, in at least one of cases that any first target difference is greater than the difference threshold and the second registration error corresponding to any third marker point is greater than an error threshold, all third marker points having differences greater than the difference threshold and all third marker points having second registration errors greater than the error threshold, determine remaining third marker points as Xth marker points, where X is greater than 3, re-registere the primary registration model with the actual pelvis according to the Xth marker point to obtain an X-ary registration model and an X-ary registration matrix, execute computation through the iterative closest point algorithm to obtain an (X-1)th registration error matrix, where the (X-1)th registration error matrix includes a plurality of (X-1)th registration errors, the (X-1)th registration error is a root mean square error of a (2X-3)th distance and a (2X-2)th distance, the (2X-3)th distance is a distance between the Xth marker point and an (X-1)th predetermined point, and the (2X-2)th distance is a distance between a corresponding point of the Xth marker point in the X-ary registration model and a corresponding point of the (X-1)th predetermined point in the X-ary registration model, repeat the point deletion step and the tertiary registration step until a first case or a second case occurs, where the first case is that all second target differences are less than or equal to the difference threshold and all the (X-1)th registration errors are less than or equal to the error threshold, and the second case is that the quantity of all the deleted points is greater than or equal to a predetermined quantity, determine a matrix having a minimum mean of matrix elements of the first registration error matrix, the second registration error matrix and all (X-1)th registration error matrices as the optimized registration error matrix, and determine a matrix corresponding to the optimized registration error matrix in the secondary registration matrix, the tertiary registration matrix and all X-ary registration matrices as the optimized registration matrix, where the second target difference is a difference between the Xth registration error corresponding to the (X-1)th marker point and an (X-2)th registration error corresponding to the (X-1)th deleted marker point. Specifically, the third marker points are second marker points not deleted, and in cases that all the first target differences are less than or equal to the difference threshold and the second registration errors corresponding to all the third marker points are less than or equal to the error threshold, it is proved that it is effective to improve registration accuracy by carrying out registration by deleting points through an ICP algorithm. Otherwise, it is indicated that in the second registration error matrix, there is a second registration error of the third marker point greater than a second registration error of a deleted second marker point, and the difference is greater than the difference threshold, or there is a second registration error of the third marker point greater than the error threshold, which proves that it is not effective to improve registration accuracy by carrying out registration by deleting points through an ICP algorithm, and it is required to carry out registration again by deleting points. All third marker points having differences greater than the difference threshold and all third marker points having second registration errors greater than the error threshold are deleted, and remaining third marker points are determined as Xth marker points such that the point deletion step and the tertiary registration step may be repeated until all the second target differences are less than or equal to the difference threshold and all (X-1)th registration errors are less than or equal to the error threshold, or the quantity of all the deleted points is greater than or equal to a predetermined quantity. A matrix having a minimum mean of matrix elements of all the registration error matrices is determined as the optimized registration error matrix, and a matrix corresponding to the optimized registration error matrix in the secondary registration matrix, the tertiary registration matrix, and all X-ary registration matrices is determined as the optimized registration matrix.

It should be noted that in the point deletion step, all third marker points having differences greater than the difference threshold and all third marker points having second registration errors greater than the error threshold are deleted, and remaining third marker points are retained. Alternatively, all third marker points having differences greater than the difference threshold and all second marker points having second registration errors greater than the error threshold are deleted from the second marker points, and remaining second marker points are retained.

In an example of the disclosure, the device further includes a first processing unit, and the first processing unit includes a second processing module, a first update module, a first repetition module and a third determination module. The second processing module is configured to rotate, after the registration model corresponding to the optimized registration matrix is determined as the optimized registration model, the optimized registration model around a rotation axis by a predetermined angle to obtain a rotation model, where the predetermined angle is any angle from -180° to 180°. The first update module is configured to update the primary registration model to the rotation model. The first repetition module is configured to repeat the secondary registration step, the point deletion step, the tertiary registration step, the first determination step and the second determination step to obtain an optimized registration error matrix and an optimized registration model corresponding to the predetermined angle. The third determination module is configured to determine a target rotation angle according to optimized registration error matrices corresponding to a plurality of predetermined angles, where the target rotation angle is the predetermined angle corresponding to the optimized registration error matrix having a minimum mean of matrix elements of the optimized registration error matrices corresponding to the plurality of predetermined angles. Specifically, the primary registration model is rotated around a rotation axis to obtain rotation models every predetermined angle from -180° - 180°, the primary registration model is updated to the rotation model, and the secondary registration step, the point deletion step, the tertiary registration step, the first determination step and the second determination step are executed once to obtain a plurality of the optimized registration error matrices. The predetermined angle corresponding to the optimized registration error matrix having a minimum mean of matrix elements is determined as the target rotation angle, and an initial position of a point set to be registered is changed by rotating the registration model around the rotation axis in three-dimensional space. Therefore, the situation that the ICP algorithm for registration used in the current intraoperative pelvic registration is likely to be limited to local optima, such that the algorithm loses an optimal solution and obtains a sub-optimal solution is reduced or avoided, and registration accuracy of intraoperative clinical practice is improved and enhanced.

In an example of the disclosure, the third determination module includes a first determination sub-module and a second determination sub-module. The first determination sub-module is configured to determine a preliminary registration model according to the optimized registration error matrices corresponding to -180° and a plurality of first predetermined angles spaced from each other by a first interval angle, where the preliminary registration model is the optimized registration model corresponding to a preferred angle of the optimized registration error matrix having a minimum mean of matrix elements of the optimized registration error matrices corresponding to -180° and the first predetermined angles, a difference between a minimum first predetermined angle and -180° is less than or equal to the first interval angle, and a difference between 180° and a maximum first predetermined angle is less than or equal to the first interval angle. The second determination sub-module is configured to determine the target rotation angle according to the optimized registration error matrices corresponding to a minimum angle, a maximum angle and a plurality of second predetermined angles spaced from each other by a second interval angle, where the target rotation angle is the second predetermined angle corresponding to the optimized registration error matrix having a minimum mean of matrix elements of the optimized registration error matrices corresponding to the minimum angle, the maximum angle and the second predetermined angle, the second interval angle is less than the first interval angle, the minimum angle is a difference between the preferred angle and the first interval angle, and the maximum angle is the sum of the preferred angle and the first interval angle. Specifically, the primary registration model is rotated around a rotation axis to obtain first rotation models every first predetermined angle corresponding to first interval angle k° from -180° - 180°, the primary registration model is updated to the first rotation model, the secondary registration step, the point deletion step, the tertiary registration step, the first determination step and the second determination step are executed once to obtain a plurality of the optimized registration error matrices, and the first predetermined angle corresponding to the optimized registration error matrix having a minimum mean of matrix elements as preferred angle α. A second rotation model is obtained every second predetermined angle corresponding to second interval angle 1° from minimum angle (α-k)° to maximum angle (α+k)°, the primary registration model is updated to a second rotation model, and the secondary registration step, the point deletion step, the tertiary registration step once, the first determination step and the second determination step are executed to obtain a plurality of optimized registration error matrices. The second predetermined angle corresponding to the optimized registration error matrix having a minimum mean of matrix elements is determined as the target rotation angle, and the target rotation angle is determined by carrying out rotary registration twice, so as to avoid excessive computed angles and reduce a computation quantity.

In an example of the disclosure, rotation axes include a first straight line, a second straight line and a third straight line, any two of the first straight line, the second straight line and the third straight line are perpendicular to each other, and the rotation axes correspond to the target rotation angles in a one-to-one correspondence manner. Specifically, rotation axes include a first straight line, a second straight line and a third straight line, that is, an X axis, a Y axis and a Z axis, the registration model rotates around a coordinate axis in an X-Y-Z coordinate system, and the rotation axes correspond to the target rotation angles in a one-to-one correspondence manner.

In an example of the disclosure, the device further includes a second processing unit, and the second processing unit includes a fourth determination module, a fifth determination module, a second update module, a second repetition module and a sixth determination module. The fourth determination module is configured to determine, after the target rotation angle is determined according to the optimized registration error matrices corresponding to a minimum angle, a maximum angle and a plurality of second predetermined angles spaced from each other by a second interval angle, three rotation matrices according to three target rotation angles. The fifth determination module is configured to determine three projection transformation matrices according to the three rotation matrices and a target pose matrix, where the target pose matrix is a pose matrix of an acetabulum when an acetabular cup is implanted during preoperative planning. The second update module is configured to update the secondary registration matrix to the projection transformation matrix. The second repetition module is configured to repeat the point deletion step, the tertiary registration step, the first determination step and the second determination step to obtain three optimized registration error matrices and three optimized registration models. The sixth determination module is configured to determine an optimal registration error matrix and an optimal registration model according to the three optimized registration error matrices and the three optimal registration models, where the optimal registration error matrix is a matrix having a minimum mean of matrix elements and a variance of the matrix elements less than a variance threshold of the three optimized registration error matrices, and the optimal registration model is a registration model corresponding to the optimized registration error matrix. Specifically, the rotation matrix is determined according to the target rotation angle, for example, the target rotation angles corresponding to the X axis, the Y axis and the Z axis are all θ, the rotation matrix ${R}_{x} = \left[\begin{matrix}1 & 0 & 0 & 0 \\ 0 & cos θ & - sin θ & 0 \\ 0 & sin θ & cos θ & 0 \\ 0 & 0 & 0 & 1\end{matrix}\right]$, the rotation matrix ${R}_{y} = \left[\begin{matrix}cos θ & 0 & sin θ & 0 \\ 0 & 1 & 0 & 0 \\ - sin θ & 0 & cos θ & 0 \\ 0 & 0 & 0 & 1\end{matrix}\right]$, the rotation matrix ${R}_{z} = \left[\begin{matrix}cos θ & - sin θ & 0 & 0 \\ sin θ & cos θ & 0 & 0 \\ 0 & 0 & 1 & 0 \\ 0 & 0 & 0 & 1\end{matrix}\right]$, when registration disturbance rotation is carried out, the pose matrix of the acetabulum when the acetabular cup is implanted during preoperative planning is obtained, and the projection transformation matrix is Tf = C*R*_{θ}**C⁻¹, and the secondary registration matrix is updated to the projection transformation matrix; and the point deletion step, the tertiary registration step, the first determination step and the second determination step are repeated to obtain three optimized registration error matrices and three optimized registration models, where the optimal registration error matrix is a matrix having a minimum mean of matrix elements and a variance of the matrix elements less than a variance threshold of the three optimized registration error matrices, and the optimal registration model is a registration model corresponding to the optimized registration error matrix.

In an example of the disclosure, the first determination unit includes an establishment module, a third computation module, a fourth computation module and a seventh determination module. The establishment module is configured to establish a deviation function, where the deviation function is used for computing the sum of a collection error and a point cloud error, the collection error is the sum of registration errors of collection points, the collection point is any one of the first marker point, the second marker point and the third marker point, and the point cloud error is the sum of distances between the registration model and points obtained after points of the actual pelvis are subjected to registration matrix transformation. The third computation module is configured to compute a first deviation according to the secondary registration model, the secondary registration matrix and the deviation function, where the first deviation is the sum of a first collection error and a first point cloud error, the first collection error is the sum of the first registration errors of the second marker points, and the first point cloud error is the sum of distances between the secondary registration model and points obtained after points of the actual pelvis are subjected to secondary registration matrix transformation. The fourth computation module is configured to compute a second deviation according to the tertiary registration model, the tertiary registration matrix and the deviation function, where the second deviation is the sum of a second collection error and a second point cloud error, the second collection error is the sum of the second registration errors of the third marker points, and the second point cloud error is the sum of distances between the tertiary registration model and points obtained after points of the actual pelvis are subjected to tertiary registration matrix transformation. The seventh determination module is configured to determine the optimized registration matrix according to the first deviation and the second deviation, where the optimized registration matrix is a registration matrix corresponding to a less one of the first deviation and the second deviation. Specifically, the deviation function is $f \left(T\right) = {\sum }_{i = 1}^{p} w \left({d}_{i}\right) + {\sum }_{j = 1}^{q} dist \left(S, {TQ}_{j}^{S}\right)$, where ${d}_{i} = \left|{P}_{i}^{V}-{TP}_{i}^{S}\right| , w \left({d}_{i}\right) = \left\{\begin{matrix}0 & {d}_{i} < min \\ tol * \frac{{d}_{i} - min}{tol - min} & min \leq {d}_{i} < tol \\ {d}_{i} * exp \left({d}_{i}-tol\right) & else\end{matrix}\right.$, T refers to conversion between a coordinate system of an actual pelvis during surgery and a coordinate system of a registration model, p is the quantity of points of registered marker points, q is the quantity of points of a point cloud of a registration model, ${P}_{i}^{V}$ is a corresponding point of a marker point collected on the actual pelvis on the registration model, ${P}_{i}^{S}$ is a marker point collected on the actual pelvis, S is a point cloud of the registration model, ${Q}_{j}^{S}$ is a point on the actual pelvis, and $dist \left(S, {TQ}_{j}^{S}\right)$ is used to compute a distance from a projection point ${Q}_{j}^{S}$ to registration model S. A penalty function *ω*(*dᵢ*) is used for computing a distance between point ${P}_{i}^{V}$ in a visible coordinate system of the registration model and corresponding point ${P}_{i}^{S}$ in a coordinate system of an actual pelvis during surgery by adding a linear or exponential penalty term, so as to further optimize a deviation function. Specifically, tol is an error threshold, and min is a minimum value of matrix elements of the registration error matrix. The first deviation is computed through deviation function f(T), so as to determine a registration matrix having a minimum first deviation as the optimized registration matrix, thereby determining the registration model corresponding to the optimized registration matrix as the optimized registration model.

It should be noted that by minimizing deviation function f(T), points having distances less than the error threshold are retained, and a distance error of the points is tolerable. Points having distances greater than the threshold and still carrying certain key information are recalled within a certain range through an exponential function, so as to participate in optimal computation of the deviation function. In combination with the point deletion and rotation methods, the iterative closest point algorithm for registration for intraoperative pelvic registration is optimized and improved. Moreover, the situation that an objective function is likely to be limited to local optima due to influences of local bad point pairs or noise and the ICP algorithm is reduced.

The device for pelvic registration includes a processor and a memory, the first processing unit, the second processing unit, the third processing unit, the fourth processing unit, the first determination unit, the second determination unit, etc. are all stored in the memory as program units, and the processor executes the program units stored in the memory to implement corresponding functions.

The processor includes a core, and the core calls corresponding program units in the memory. One or more cores can be arranged, and the problem of big errors of pelvic registration in the prior art is solved by adjusting core parameters.

The memory may be a volatile memory, a random access memory (RAM) and a non-volatile memory, etc., such as a read-only memory (ROM) or a flash RAM, in a computer-readable medium, and the memory includes at least one memory chip.

An example of the disclosure provides a computer-readable storage medium. The computer-readable storage medium stores a program, and the program implements the above method when executed by a processor.

An example of the disclosure provides a processor. The processor is configured to run a program, and the program executes the above method when run.

An example of the disclosure provides an apparatus. The apparatus includes a processor, a memory and a program that is stored in the memory and can be run on the processor, and the processor implements at least the following steps when executing the program:
step S101: executed a primary registration step of registering a three-dimensional model of a pelvis with an actual pelvis according to M first marker points to obtain a primary registration model and a primary registration matrix, where the first marker point is any point of the pelvis, at least three first marker points are not located on the same straight line, and M ≥ 3;
step S102: executed a secondary registration step of registering the primary registration model with the actual pelvis according to N second marker points to obtain a secondary registration model and a secondary registration matrix, where the second marker point is any point of the pelvis, and N > M;
step S103: executed a point deletion step of deleting second marker points having first registration errors greater than an error threshold and determining remaining second marker points as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model;
step S104: executed a tertiary registration step of registering the primary registration model with the actual pelvis according to the plurality of third marker points to obtain a tertiary registration model and a tertiary registration matrix;
step S105: executed a first determination step of determining an optimized registration matrix according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model; and
step S106: executed a second determination step of determining a registration model corresponding to the optimized registration matrix as an optimized registration model.

The apparatus herein can be a server, a PC (Personal Computer), a PAD, a mobile phone, etc.

The disclosure further provides a computer program product. The computer program product is suitable for executing a program initialized to have at least the following method steps when executed on a data processing apparatus:
step S101: executed a primary registration step of registering a three-dimensional model of a pelvis with an actual pelvis according to M first marker points to obtain a primary registration model and a primary registration matrix, where the first marker point is any point of the pelvis, at least three first marker points are not located on the same straight line, and M ≥ 3;
step S102: executed a secondary registration step of registering the primary registration model with the actual pelvis according to N second marker points to obtain a secondary registration model and a secondary registration matrix, where the second marker point is any point of the pelvis, and N > M;
step S103: executed a point deletion step of deleting second marker points having first registration errors greater than an error threshold and determining remaining second marker points as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model;
step S104: executed a tertiary registration step of registering the primary registration model with the actual pelvis according to the plurality of third marker points to obtain a tertiary registration model and a tertiary registration matrix;
step S105: executed a first determination step of determining an optimized registration matrix according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model; and
step S106: executed a second determination step of determining a registration model corresponding to the optimized registration matrix as an optimized registration model.

In the above examples of the disclosure, description for each example has its own emphasis, and for the part which is not described in detail in a certain example, reference can be made to relevant description in other examples.

In several examples provided in the disclosure, it should be understood that the disclosed technology can be implemented in other ways. The device example described above is merely illustrative, for example, division of the above units can be division of logical functions, and there can be other division manners during actual implementation. For example, a plurality of units or assemblies can be combined or integrated into another system, or some features can be ignored or not executed. Further, shown or discussed coupling, direct coupling or communication connection between each other can be indirect coupling or communication connection by means of some interfaces, units or modules, and can be in an electrical form or another form.

The above units described as separated components can be physically separated or not, and the components displayed as units can be physical units or not, that is, they can be located at one place or distributed on a plurality of units. Part or all of the units can be selected according to actual requirements to realize the objective of the solution of the example.

In addition, all functional units in each example of the disclosure can be integrated into one processing unit, or can be independently and physically present, or two or more units can be integrated into one unit. The above integrated unit can be implemented in the form of hardware or a software functional unit.

The above integrated unit can be stored in a computer-readable storage medium if implemented in the form of a software functional unit and sold or used as an independent product. On the basis of the understanding, the technical solution of the disclosure can be embodied in the form of a software product in essence or a part contributing to the prior art or all or part of the technical solution, and the computer software product is stored in a computer-readable storage medium and includes several instructions for enabling a computer device (which can be a personal computer, a server or a network device, etc.) to implement all or some of the steps of the methods described in various examples of the disclosure. The foregoing computer-readable storage medium can be a universal serial bus flash disk, a read-only memory (ROM), a random access memory (RAM), a mobile hard disk, a magnetic disk, an optical disk and other media capable of storing program codes.

From the above description, it can be seen that the above examples of the disclosure achieve technical effects as follows:
1) In the method for pelvic registration in the disclosure, firstly, a primary registration step of registering a three-dimensional model of a pelvis with an actual pelvis according to M first marker points to obtain a primary registration model and a primary registration matrix is executed, where the first marker point is any point of the pelvis, at least three first marker points are not located on the same straight line, and M ≥ 3. Then, a secondary registration step of registering the primary registration model with the actual pelvis according to N second marker points to obtain a secondary registration model and a secondary registration matrix is executed, where the second marker point is any point of the pelvis, and N > M. A point deletion step of deleting second marker points having first registration errors greater than an error threshold and determining remaining second marker points as third marker points is executed, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model. A tertiary registration step of registering the primary registration model with the actual pelvis according to the plurality of third marker points to obtain a tertiary registration model and a tertiary registration matrix is executed. A first determination step of determining an optimized registration matrix according to a mean of first registration errors and a mean of second registration errors is executed, where the optimized registration matrix is a registration matrix corresponding to a less one of the mean of the first registration errors and the mean of the second registration errors, the second registration error is a root mean square error of the first distance and a third distance, the third distance is a distance between a corresponding point of the second marker point in the tertiary registration model and a corresponding point of the predetermined point in the tertiary registration model, and the fourth distance is a distance between a corresponding point of the third marker point in the tertiary registration model and a corresponding point of the predetermined point in the tertiary registration model. Finally, a second determination step of determining a registration model corresponding to the optimized registration matrix as an optimized registration model is executed. In the method, after primary registration and secondary registration, tertiary registration is executed by deleting points having big registration errors, a registration error matrix is obtained through computation, a registration matrix and a registration model corresponding to the registration error matrix having a minimum error mean are determined as an optimized registration matrix and an optimized registration model by comparing registration error matrices of secondary registration and tertiary registration, registration accuracy is improved by deleting influences of bad point pairs and noise points on operation, and the problem of big errors of pelvic registration in the prior art is solved.
2) In the device for pelvic registration in the disclosure, a first processing unit executes a primary registration step of registering a three-dimensional model of a pelvis with an actual pelvis according to M first marker points to obtain a primary registration model and a primary registration matrix, where the first marker point is any point of the pelvis, at least three first marker points are not located on the same straight line, and M ≥ 3. A second processing unit executes a secondary registration step of registering the primary registration model with the actual pelvis according to N second marker points to obtain a secondary registration model and a secondary registration matrix, where the second marker point is any point of the pelvis, and N > M. A third processing unit executes a point deletion step of deleting second marker points having first registration errors greater than an error threshold and determining remaining second marker points as third marker points, where the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model. A fourth processing unit executes a tertiary registration step of registering the primary registration model with the actual pelvis according to the plurality of third marker points to obtain a tertiary registration model and a tertiary registration matrix. A first determination unit executes a first determination step of determining an optimized registration matrix according to a mean of first registration errors and a mean of second registration errors, where the optimized registration matrix is a registration matrix corresponding to a less one of the mean of the first registration errors and the mean of the second registration errors, the second registration error is a root mean square error of the first distance and a third distance, the third distance is a distance between a corresponding point of the second marker point in the tertiary registration model and a corresponding point of the predetermined point in the tertiary registration model, and the fourth distance is a distance between a corresponding point of the third marker point in the tertiary registration model and a corresponding point of the predetermined point in the tertiary registration model. A second determination unit executes a second determination step of determining a registration model corresponding to the optimized registration matrix as an optimized registration model. According to the device, after primary registration and secondary registration, tertiary registration is executed by deleting points having big registration errors, a registration error matrix is obtained through computation, a registration matrix and a registration model corresponding to the registration error matrix having a minimum error mean are determined as an optimized registration matrix and an optimized registration model by comparing registration error matrices of secondary registration and tertiary registration, registration accuracy is improved by deleting influences of bad point pairs and noise points on operation, and the problem of big errors of pelvic registration in the prior art is solved.

What are mentioned above are merely preferred examples of the disclosure and are not intended to limit the disclosure, and various changes and modifications can be made on the disclosure by those skilled in the art. Any modifications, equivalent substitutions, improvements, etc. without departing from the scope of the invention/ method/apparatus as defined in the appended claims.

## Claims

1. A method for pelvic registration executed by a processor, comprising:
executing a primary registration step of registering a three-dimensional model of a pelvis with an actual pelvis according to M first marker points to obtain a primary registration model and a primary registration matrix, wherein the first marker point is any point of the pelvis, at least three first marker points are not located on the same straight line, and M ≥ 3;
executing a secondary registration step of registering the primary registration model with the actual pelvis according to N second marker points to obtain a secondary registration model and a secondary registration matrix, wherein the second marker point is any point of the pelvis, and N > M;
executing a point deletion step of deleting second marker points having first registration errors greater than an error threshold and determining remaining second marker points as third marker points, wherein the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model, the predetermined point is another second marker point closest to a target second marker point, the target second marker point is any one of the second marker points;
executing a tertiary registration step of registering the primary registration model with the actual pelvis according to the plurality of third marker points to obtain a tertiary registration model and a tertiary registration matrix;
executing a first determination step of determining an optimized registration matrix according to a mean of first registration errors and a mean of second registration errors, wherein the optimized registration matrix is a registration matrix corresponding to a smallest one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model;
executing a second determination step of determining a registration model corresponding to the optimized registration matrix as an optimized registration model;
wherein the determining an optimized registration matrix according to a mean of first registration errors and a mean of second registration errors comprises:
obtaining a first registration error matrix through an iterative closest point algorithm, wherein the first registration error matrix comprises N first registration errors, the predetermined point is another second marker point closest to the second marker point;
obtaining a second registration error matrix through the iterative closest point algorithm, wherein the second registration error matrix comprises N second registration errors; and
determining an optimized registration error matrix and the optimized registration matrix according to the first registration error matrix and the second registration error matrix, wherein the optimized registration error matrix is the first registration error matrix or the second registration error matrix which having a minimum mean of matrix elements, and the optimized registration matrix is a registration matrix corresponding to the optimized registration error matrix;
wherein the determining an optimized registration matrix according to a mean of first registration errors and a mean of second registration errors comprises:
in cases that all first target differences are less than or equal to a difference threshold and all the second registration errors corresponding to the third marker points are less than or equal to an error threshold, determining the first registration error matrix or the second registration error matrix which has a minimum mean of matrix elements as the optimized registration error matrix, and determine the secondary registration matrix or the tertiary registration matrix which corresponds to the optimized registration error matrix as the optimized registration matrix, wherein the first target difference is a difference between the second registration error corresponding to the third marker point and the second registration error corresponding to the deleted second marker point; and
in at least one of cases that any first target difference is greater than the difference threshold and the second registration error corresponding to any third marker point is greater than an error threshold, deleting all third marker points having differences greater than the difference threshold and all third marker points having second registration errors greater than the error threshold, determining remaining third marker points as Xth marker points, wherein X is greater than 3, re-registering the primary registration model with the actual pelvis according to the Xth marker point to obtain an X-ary registration model and an X-ary registration matrix, executing computation through the iterative closest point algorithm to obtain an (X-1)th registration error matrix, wherein the (X-1)th registration error matrix comprises a plurality of (X-1)th registration errors, the (X-1)th registration error is a root mean square error of a (2X-3)th distance and a (2X-2)th distance, the (2X-3)th distance is a distance between the Xth marker point and an (X-1)th predetermined point, and the (2X-2)th distance is a distance between a corresponding point of the Xth marker point in the X-ary registration model and a corresponding point of the (X-1)th predetermined point in the X-ary registration model, repeating the point deletion step and the tertiary registration step until a first case or a second case occurs, wherein the first case is that all second target differences are less than or equal to the difference threshold and all the (X-1)th registration errors are less than or equal to the error threshold, and the second case is that the quantity of all the deleted points is greater than or equal to a predetermined quantity, determining the first registration error matrix, the second registration error matrix or one of (X-1)th registration error matrices which has a minimum mean of matrix elements as the optimized registration error matrix, and determining the secondary registration matrix, the tertiary registration matrix or one of X-ary registration matrices which corresponds to the optimized registration error matrix as the optimized registration matrix, wherein the second target difference is a difference between the Xth registration error corresponding to the (X-1)th marker point and an (X-2)th registration error corresponding to the (X-1)th deleted marker point.

2. The method according to claim 1, wherein after the determining a registration model corresponding to the optimized registration matrix as an optimized registration model, the method further comprises:
rotating the optimized registration model around a rotation axis by a predetermined angle to obtain a rotation model, wherein the predetermined angle is any angle from -180° to 180°;
updating the primary registration model to the rotation model;
repeating the secondary registration step, the point deletion step, the tertiary registration step, the first determination step and the second determination step to obtain an optimized registration error matrix and an optimized registration model corresponding to the predetermined angle; and
determining a target rotation angle according to optimized registration error matrices corresponding to a plurality of predetermined angles, wherein the target rotation angle is the predetermined angle corresponding to the optimized registration error matrix having a minimum mean of matrix elements of the optimized registration error matrices corresponding to the plurality of predetermined angles.

3. The method according to claim 2, wherein the determining a target rotation angle according to optimized registration error matrices corresponding to a plurality of predetermined angles comprises:
obtaining the optimized registration error matrix corresponding to -180° and the optimized registration error matrices corresponding to a plurality of first predetermined angles, and determining a preferred angle among -180° and the first predetermined angles which corresponds to the optimized registration error matrix having a minimum mean of matrix elements, wherein the first predetermined angles spaced from each other by a first interval angle, a difference between a minimum first predetermined angle and -180° is less than or equal to the first interval angle, and a difference between 180° and a maximum first predetermined angle is less than or equal to the first interval angle; and
determining the target rotation angle according to the optimized registration error matrices corresponding to a minimum angle, a maximum angle and a plurality of second predetermined angles spaced from each other by a second interval angle, wherein the target rotation angle is the second predetermined angle corresponding to the optimized registration error matrix having a minimum mean of matrix elements of the optimized registration error matrices corresponding to the minimum angle, the maximum angle and the second predetermined angle, the second interval angle is less than the first interval angle, the minimum angle is a difference between the preferred angle and the first interval angle, and the maximum angle is the sum of the preferred angle and the first interval angle.

4. The method according to claim 3, wherein rotation axes comprise a first straight line, a second straight line and a third straight line, any two of the first straight line, the second straight line and the third straight line are perpendicular to each other, and the rotation axes correspond to the target rotation angles in a one-to-one correspondence manner.

5. The method according to claim 4, wherein after the determining the target rotation angle according to the optimized registration error matrices corresponding to a minimum angle, a maximum angle and a plurality of second predetermined angles spaced from each other by a second interval angle, the method further comprises:
determining three rotation matrices according to three target rotation angles;
determining three projection transformation matrices according to the three rotation matrices and a target pose matrix, wherein the target pose matrix is a pose matrix of an acetabulum when an acetabular cup is implanted during preoperative planning;
updating the secondary registration matrix to the projection transformation matrix;
repeating the point deletion step, the tertiary registration step, the first determination step and the second determination step to obtain three optimized registration error matrices and three optimized registration models; and
determining an optimal registration error matrix and an optimal registration model according to the three optimized registration error matrices and the three optimized registration models, wherein the optimal registration error matrix is a matrix having a minimum mean of matrix elements and a variance of the matrix elements less than a variance threshold of the three optimized registration error matrices, and the optimal registration model is a registration model corresponding to the optimized registration error matrix.

6. The method according to claim 1, wherein the determining an optimized registration matrix according to a mean of first registration errors and a mean of second registration errors comprises:
establishing a deviation function, wherein the deviation function is used for computing the sum of a collection error and a point cloud error, the collection error is the sum of registration errors of collection points, the collection point is any one of the first marker point, the second marker point and the third marker point, and the point cloud error is the sum of distances between the registration model and points obtained after points of the actual pelvis are subjected to registration matrix transformation;
computing a first deviation according to the secondary registration model, the secondary registration matrix and the deviation function, wherein the first deviation is the sum of a first collection error and a first point cloud error, the first collection error is the sum of the first registration errors of the second marker points, and the first point cloud error is the sum of distances between the secondary registration model and points obtained after points of the actual pelvis are subjected to secondary registration matrix transformation;
computing a second deviation according to the tertiary registration model, the tertiary registration matrix and the deviation function, wherein the second deviation is the sum of a second collection error and a second point cloud error, the second collection error is the sum of the second registration errors of the third marker points, and the second point cloud error is the sum of distances between the tertiary registration model and points obtained after points of the actual pelvis are subjected to tertiary registration matrix transformation; and
determining the optimized registration matrix according to the first deviation and the second deviation, wherein the optimized registration matrix is a registration matrix corresponding to a smallest one of the first deviation and the second deviation.

7. A device for pelvic registration, comprising:
a first processing unit configured to execute a primary registration step of registering a three-dimensional model of a pelvis with an actual pelvis according to M first marker points to obtain a primary registration model and a primary registration matrix, wherein the first marker point is any point of the pelvis, at least three first marker points are not located on the same straight line, and M ≥ 3;
a second processing unit configured to execute a secondary registration step of registering the primary registration model with the actual pelvis according to N second marker points to obtain a secondary registration model and a secondary registration matrix, wherein the second marker point is any point of the pelvis, and N > M;
a third processing unit configured to execute a point deletion step of deleting second marker points having first registration errors greater than an error threshold and determining remaining second marker points as third marker points, wherein the first registration error is a root mean square error of a first distance and a second distance, the first distance is a distance between the second marker point and a predetermined point, and the second distance is a distance between a corresponding point of the second marker point in the secondary registration model and a corresponding point of the predetermined point in the secondary registration model, the predetermined point is an another second marker point closest to a target second marker point, the target second marker point is any one of the second marker points;
a fourth processing unit configured to execute a tertiary registration step of registering the primary registration model with the actual pelvis according to the plurality of third marker points to obtain a tertiary registration model and a tertiary registration matrix;
a first determination unit configured to execute a first determination step of determining an optimized registration matrix according to a mean of first registration errors and a mean of second registration errors, wherein the optimized registration matrix is a registration matrix corresponding to a smallest one of the mean of the first registration errors and the mean of the second registration errors, the second registration error is a root mean square error of the first distance and a third distance, and the third distance is a distance between a corresponding point of the second marker point in the tertiary registration model and a corresponding point of the predetermined point in the tertiary registration model;
a second determination unit configured to execute a second determination step of determining a registration model corresponding to the optimized registration matrix as an optimized registration model.
the first determination unit includes a first computation module, a second computation module and a first determination module; the first computation module is configured to obtain a first registration error matrix through an iterative closest point algorithm, where the first registration error matrix includes N first registration errors, the predetermined point is another second marker point closest to the second marker point; the second computation module is configured to obtain a second registration error matrix through the iterative closest point algorithm, where the second registration error matrix includes N second registration errors; the first determination module is configured to determine an optimized registration error matrix and the optimized registration matrix according to the first registration error matrix and the second registration error matrix, wherein the optimized registration error matrix is the first registration error matrix or the second registration error matrix which having a minimum mean of matrix elements, and the optimized registration matrix is a registration matrix corresponding to the optimized registration error matrix; and
the first determination unit further includes a second determination module and a first processing module; the second determination module is configured to determine the first registration error matrix or the second registration error matrix which has a minimum mean of matrix elements as the optimized registration error matrix, in cases that all first target differences are less than or equal to a difference threshold and all the second registration errors corresponding to the third marker points are less than or equal to an error threshold, and determine the secondary registration matrix or the tertiary registration matrix which corresponds to the optimized registration error matrix as the optimized registration matrix, wherein the first target difference is a difference between the second registration error corresponding to the third marker point and the second registration error corresponding to the deleted second marker point; the first processing module is configured to delete all third marker points having differences greater than the difference threshold and all third marker points having second registration errors greater than the error threshold, in at least one of cases that any first target difference is greater than the difference threshold and the second registration error corresponding to any third marker point is greater than an error threshold, determine remaining third marker points as Xth marker points, where X is greater than 3, re-register the primary registration model with the actual pelvis according to the Xth marker point to obtain an X-ary registration model and an X-ary registration matrix, execute computation through the iterative closest point algorithm to obtain an (X-1)th registration error matrix, where the (X-1)th registration error matrix includes a plurality of (X-1)th registration errors, the (X-1)th registration error is a root mean square error of a (2X-3)th distance and a (2X-2)th distance, the (2X-3)th distance is a distance between the Xth marker point and an (X-1)th predetermined point, and the (2X-2)th distance is a distance between a corresponding point of the Xth marker point in the X-ary registration model and a corresponding point of the (X-1)th predetermined point in the X-ary registration model, repeating the point deletion step and the tertiary registration step until a first case or a second case occurs, wherein the first case is that all second target differences are less than or equal to the difference threshold and all the (X-1)th registration errors are less than or equal to the error threshold, and the second case is that the quantity of all the deleted points is greater than or equal to a predetermined quantity, determining the first registration error matrix, the second registration error matrix or one of (X-1)th registration error matrices which has a minimum mean of matrix elements as the optimized registration error matrix, and determining the secondary registration matrix, the tertiary registration matrix or one of X-ary registration matrices which corresponds to the optimized registration error matrix as the optimized registration matrix, wherein the second target difference is a difference between the Xth registration error corresponding to the (X-1)th marker point and an (X-2)th registration error corresponding to the (X-1)th deleted marker point.

8. A computer-readable storage medium, comprising a stored program, wherein the program executes the method according to any one of claims 1-6.

9. A processor, configured to run a program, wherein the program executes the method according to any one of claims 1-6 when run.

## Patentansprüche

1. Verfahren zur Beckenregistrierung, ausgeführt von einem Prozessor, umfassend:
Ausführen eines primären Registrierungsschritts des Registrierens eines dreidimensionalen Modells eines Beckens mit einem tatsächlichen Becken gemäß M ersten Markerpunkten, um ein primäres Registrierungsmodell und eine primäre Registrierungsmatrix zu erhalten, wobei der erste Markerpunkt ein beliebiger Punkt des Beckens ist, mindestens drei erste Markerpunkte nicht auf derselben geraden Linie liegen und M ≥ 3;
Ausführen eines sekundären Registrierungsschritts des Registrierens des primären Registrierungsmodells mit dem tatsächlichen Becken gemäß N zweiten Markerpunkten, um ein sekundäres Registrierungsmodell und eine sekundäre Registrierungsmatrix zu erhalten, wobei der zweite Markerpunkt ein beliebiger Punkt des Beckens ist und N > M;
Ausführen eines Punktlöschungsschritts des Löschens zweiter Markerpunkte mit ersten Registrierungsfehlern, die größer als ein Fehlerschwellenwert sind, und Bestimmen verbleibender zweiter Markerpunkte als dritte Markerpunkte, wobei der erste Registrierungsfehler eine Wurzel des mittleren quadratischen Fehlers eines ersten Abstands und eines zweiten Abstands ist, der erste Abstand ein Abstand zwischen dem zweiten Markerpunkt und einem vorbestimmten Punkt ist, und der zweite Abstand ein Abstand zwischen einem entsprechenden Punkt des zweiten Markerpunkts in dem sekundären Registrierungsmodell und einem entsprechenden Punkt des vorbestimmten Punkts in dem sekundären Registrierungsmodell ist, der vorbestimmte Punkt ein anderer zweiter Markerpunkt ist, der einem zweiten Zielmarkerpunkt am nächsten ist, der zweite Zielmarkerpunkt ein beliebiger der zweiten Markerpunkte ist;
Ausführen eines tertiären Registrierungsschritts des Registrierens des primären Registrierungsmodells mit dem tatsächlichen Becken gemäß der Vielzahl von dritten Markerpunkten, um ein tertiäres Registrierungsmodell und eine tertiäre Registrierungsmatrix zu erhalten;
Ausführen eines ersten Bestimmungsschritts des Bestimmens einer optimierten Registrierungsmatrix gemäß einem Mittelwert von ersten Registrierungsfehlern und einem Mittelwert von zweiten Registrierungsfehlern, wobei die optimierte Registrierungsmatrix eine Registrierungsmatrix ist, die einem kleinsten des Mittelwerts der ersten Registrierungsfehler und des Mittelwerts der zweiten Registrierungsfehler entspricht, der zweite Registrierungsfehler eine Wurzel des mittleren quadratischen Fehlers des ersten Abstands und eines dritten Abstands ist, und der dritte Abstand ein Abstand zwischen einem entsprechenden Punkt des zweiten Markerpunkts in dem tertiären Registrierungsmodell und einem entsprechenden Punkt des vorbestimmten Punkts in dem tertiären Registrierungsmodell ist;
Ausführen eines zweiten Bestimmungsschritts des Bestimmens eines Registrierungsmodells, das der optimierten Registrierungsmatrix entspricht, als ein optimiertes Registrierungsmodell;
wobei das Bestimmen einer optimierten Registrierungsmatrix gemäß einem Mittelwert erster Registrierungsfehler und einem Mittelwert zweiter Registrierungsfehler umfasst:
Erhalten einer ersten Registrierungsfehlermatrix durch einen Iterative-Closest-Point-Algorithmus, wobei die erste Registrierungsfehlermatrix N erste Registrierungsfehler umfasst, der vorbestimmte Punkt ein weiterer zweiter Markerpunkt ist, der dem zweiten Markerpunkt am nächsten liegt;
Erhalten einer zweiten Registrierungsfehlermatrix durch den Iterative-Closest-Point-Algorithmus, wobei die zweite Registrierungsfehlermatrix N zweite Registrierungsfehler umfasst; und
Bestimmen einer optimierten Registrierungsfehlermatrix und der optimierten Registrierungsmatrix gemäß der ersten Registrierungsfehlermatrix und der zweiten Registrierungsfehlermatrix, wobei die optimierte Registrierungsfehlermatrix die erste Registrierungsfehlermatrix oder die zweite Registrierungsfehlermatrix ist, die einen minimalen Mittelwert von Matrixelementen aufweist, und die optimierte Registrierungsmatrix eine Registrierungsmatrix ist, die der optimierten Registrierungsfehlermatrix entspricht;
wobei das Bestimmen einer optimierten Registrierungsmatrix gemäß einem Mittelwert erster Registrierungsfehler und einem Mittelwert zweiter Registrierungsfehler umfasst:
in Fällen, in denen alle ersten Zieldifferenzen kleiner oder gleich einem Differenzschwellenwert sind und alle zweiten Registrierungsfehler, die den dritten Markerpunkten entsprechen, kleiner oder gleich einem Fehlerschwellenwert sind, Bestimmen der ersten Registrierungsfehlermatrix oder der zweiten Registrierungsfehlermatrix, die einen minimalen Mittelwert von Matrixelementen aufweist, als die optimierte Registrierungsfehlermatrix, und Bestimmen der sekundären Registrierungsmatrix oder der tertiären Registrierungsmatrix, die der optimierten Registrierungsfehlermatrix entspricht, als die optimierte Registrierungsmatrix, wobei die erste Zieldifferenz eine Differenz zwischen dem zweiten Registrierungsfehler, der dem dritten Markerpunkt entspricht, und dem zweiten Registrierungsfehler, der dem gelöschten zweiten Markerpunkt entspricht, ist; und
in mindestens einem der Fälle, dass eine beliebige erste Zieldifferenz größer als der Differenzschwellenwert ist und der zweite Registrierungsfehler, der einem beliebigen dritten Markerpunkt entspricht, größer als ein Fehlerschwellenwert ist, Löschen aller dritten Markerpunkte mit Differenzen, die größer als der Differenzschwellenwert sind, und aller dritten Markerpunkte mit zweiten Registrierungsfehlern, die größer als der Fehlerschwellenwert sind, Bestimmen verbleibender dritter Markerpunkte als X-te Markerpunkte, wobei X größer als 3 ist, Neuregistrieren des primären Registrierungsmodells mit dem tatsächlichen Becken gemäß dem X-ten Markerpunkt, um ein X-äres Registrierungsmodell und eine X-äre Registrierungsmatrix zu erhalten, Ausführen einer Berechnung durch den Iterative-Closest-Point-Algorithmus, um eine (X-1)-te Registrierungsfehlermatrix zu erhalten, wobei die (X-1)-te Registrierungsfehlermatrix eine Vielzahl von (X-1)-ten Registrierungsfehlern umfasst, der (X-1)-te Registrierungsfehler eine Wurzel des mittleren quadratischen Fehlers eines (2X-3)-ten Abstands und eines (2X-2)-ten Abstands ist, der (2X-3)-te Abstand ein Abstand zwischen dem X-ten Markerpunkt und einem (X-1)-ten vorbestimmten Punkt ist, und der (2X-2)-te Abstand ein Abstand zwischen einem entsprechenden Punkt des X-ten Markerpunkts in dem X-ären Registrierungsmodell und einem entsprechenden Punkt des (X-1)-ten vorbestimmten Punkts in dem X-ären Registrierungsmodell ist, Wiederholen des Punktlöschungsschritts und des tertiären Registrierungsschritts, bis ein erster Fall oder ein zweiter Fall eintritt, wobei der erste Fall ist, dass alle zweiten Zieldifferenzen kleiner als oder gleich dem Differenzschwellenwert sind und alle (X-1)-ten Registrierungsfehler kleiner als oder gleich dem Fehlerschwellenwert sind, und der zweite Fall ist, dass die Anzahl aller gelöschten Punkte größer als oder gleich einer vorbestimmten Menge ist, Bestimmen der ersten Registrierungsfehlermatrix, der zweiten Registrierungsfehlermatrix oder einer von (X-1)-ten Registrierungsfehlermatrizen, die einen minimalen Mittelwert von Matrixelementen aufweist, als die optimierte Registrierungsfehlermatrix, und Bestimmen der sekundären Registrierungsmatrix, der tertiären Registrierungsmatrix oder einer von X-ären Registrierungsmatrizen, die der optimierten Registrierungsfehlermatrix entspricht, als die optimierte Registrierungsmatrix, wobei die zweite Zieldifferenz eine Differenz zwischen dem X-ten Registrierungsfehler, der dem (X-1)-ten Markerpunkt entspricht, und einem (X-2)-ten Registrierungsfehler, der dem (X-1)-ten gelöschten Markerpunkt entspricht, ist.

2. Verfahren nach Anspruch 1, wobei nach dem Bestimmen eines Registrierungsmodells, das der optimierten Registrierungsmatrix entspricht, als ein optimiertes Registrierungsmodell, das Verfahren ferner umfasst:
Drehen des optimierten Registrierungsmodells um eine Drehachse um einen vorbestimmten Winkel, um ein Rotationsmodell zu erhalten, wobei der vorbestimmte Winkel ein beliebiger Winkel von -180° bis 180° ist;
Aktualisieren des primären Registrierungsmodells auf das Rotationsmodell;
Wiederholen des sekundären Registrierungsschritts, des Punktlöschungsschritts, des tertiären Registrierungsschritts, des ersten Bestimmungsschritts und des zweiten Bestimmungsschritts, um eine optimierte Registrierungsfehlermatrix und ein optimiertes Registrierungsmodell entsprechend dem vorbestimmten Winkel zu erhalten; und
Bestimmen eines Zielrotationswinkels gemäß optimierten Registrierungsfehlermatrizen, die einer Vielzahl von vorbestimmten Winkeln entsprechen, wobei der Zielrotationswinkel der vorbestimmte Winkel ist, der der optimierten Registrierungsfehlermatrix entspricht, die einen minimalen Mittelwert von Matrixelementen der optimierten Registrierungsfehlermatrizen aufweist, die der Vielzahl von vorbestimmten Winkeln entsprechen.

3. Verfahren nach Anspruch 2, wobei das Bestimmen eines Zielrotationswinkels gemäß optimierten Registrierungsfehlermatrizen entsprechend einer Vielzahl von vorbestimmten Winkeln umfasst:
Erhalten der optimierten Registrierungsfehlermatrix, die -180° entspricht, und der optimierten Registrierungsfehlermatrizen, die einer Vielzahl von ersten vorbestimmten Winkeln entsprechen, und Bestimmen eines bevorzugten Winkels unter -180° und den ersten vorbestimmten Winkeln, der der optimierten Registrierungsfehlermatrix mit einem minimalen Mittelwert von Matrixelementen entspricht, wobei die ersten vorbestimmten Winkel um einen ersten Intervallwinkel voneinander beabstandet sind, eine Differenz zwischen einem minimalen ersten vorbestimmten Winkel und -180° kleiner als oder gleich dem ersten Intervallwinkel ist und eine Differenz zwischen 180° und einem maximalen ersten vorbestimmten Winkel kleiner als oder gleich dem ersten Intervallwinkel ist; und
Bestimmen des Zieldrehwinkels gemäß den optimierten Registrierungsfehlermatrizen, die einem minimalen Winkel, einem maximalen Winkel und einer Vielzahl von zweiten vorbestimmten Winkeln entsprechen, die voneinander durch einen zweiten Intervallwinkel beabstandet sind, wobei der Zieldrehwinkel der zweite vorbestimmte Winkel ist, der der optimierten Registrierungsfehlermatrix entspricht, die einen minimalen Mittelwert von Matrixelementen der optimierten Registrierungsfehlermatrizen aufweist, die dem minimalen Winkel, dem maximalen Winkel und dem zweiten vorbestimmten Winkel entsprechen, der zweite Intervallwinkel kleiner als der erste Intervallwinkel ist, der minimale Winkel eine Differenz zwischen dem bevorzugten Winkel und dem ersten Intervallwinkel ist und der maximale Winkel die Summe aus dem bevorzugten Winkel und dem ersten Intervallwinkel ist.

4. Verfahren nach Anspruch 3, wobei Rotationsachsen eine erste gerade Linie, eine zweite gerade Linie und eine dritte gerade Linie umfassen, beliebige zwei der ersten geraden Linie, der zweiten geraden Linie und der dritten geraden Linie senkrecht zueinander stehen und die Rotationsachsen den Zielrotationswinkeln in einer Eins-zu-Eins-Entsprechung entsprechen.

5. Verfahren nach Anspruch 4, wobei nach dem Bestimmen des Zielrotationswinkels gemäß den optimierten Registrierungsfehlermatrizen entsprechend einem minimalen Winkel, einem maximalen Winkel und einer Vielzahl von zweiten vorbestimmten Winkeln, die voneinander durch einen zweiten Intervallwinkel beabstandet sind, das Verfahren ferner umfasst:
Bestimmen von drei Rotationsmatrizen gemäß drei Zielrotationswinkeln;
Bestimmen von drei Projektionstransformationsmatrizen gemäß den drei Rotationsmatrizen und einer Zielpositionsmatrix, wobei die Zielpositionsmatrix eine Positionsmatrix eines Acetabulums ist, wenn eine Acetabulumschale während der präoperativen Planung implantiert wird;
Aktualisieren der sekundären Registrierungsmatrix auf die Projektionstransformationsmatrix;
Wiederholen des Punktlöschungsschritts, des tertiären Registrierungsschritts, des ersten Bestimmungsschritts und des zweiten Bestimmungsschritts, um drei optimierte Registrierungsfehlermatrizen und drei optimierte Registrierungsmodelle zu erhalten; und
Bestimmen einer optimalen Registrierungsfehlermatrix und eines optimalen Registrierungsmodells gemäß den drei optimierten Registrierungsfehlermatrizen und den drei optimierten Registrierungsmodellen, wobei die optimale Registrierungsfehlermatrix eine Matrix mit einem minimalen Mittelwert von Matrixelementen und einer Varianz der Matrixelemente ist, die kleiner als ein Varianzschwellenwert der drei optimierten Registrierungsfehlermatrizen ist, und das optimale Registrierungsmodell ein Registrierungsmodell ist, das der optimierten Registrierungsfehlermatrix entspricht.

6. Verfahren nach Anspruch 1, wobei das Bestimmen einer optimierten Registrierungsmatrix gemäß einem Mittelwert von ersten Registrierungsfehlern und einem Mittelwert von zweiten Registrierungsfehlern umfasst:
Erstellen einer Abweichungsfunktion, wobei die Abweichungsfunktion zum Berechnen der Summe aus einem Erfassungsfehler und einem Punktwolkenfehler verwendet wird, der Erfassungsfehler die Summe von Registrierungsfehlern von Erfassungspunkten ist, der Erfassungspunkt ein beliebiger des ersten Markerpunkts, des zweiten Markerpunkts und des dritten Markerpunkts ist, und der Punktwolkenfehler die Summe von Abständen zwischen dem Registrierungsmodell und Punkten ist, die erhalten werden, nachdem Punkte des tatsächlichen Beckens einer Registrierungsmatrixtransformation unterzogen wurden;
Berechnen einer ersten Abweichung gemäß dem sekundären Registrierungsmodell, der sekundären Registrierungsmatrix und der Abweichungsfunktion, wobei die erste Abweichung die Summe aus einem ersten Erfassungsfehler und einem ersten Punktwolkenfehler ist, der erste Erfassungsfehler die Summe der ersten Registrierungsfehler der zweiten Markerpunkte ist, und der erste Punktwolkenfehler die Summe von Abständen zwischen dem sekundären Registrierungsmodell und Punkten ist, die erhalten werden, nachdem Punkte des tatsächlichen Beckens einer sekundären Registrierungsmatrixtransformation unterzogen wurden;
Berechnen einer zweiten Abweichung gemäß dem tertiären Registrierungsmodell, der tertiären Registrierungsmatrix und der Abweichungsfunktion, wobei die zweite Abweichung die Summe aus einem zweiten Erfassungsfehler und einem zweiten Punktwolkenfehler ist, der zweite Erfassungsfehler die Summe der zweiten Registrierungsfehler der dritten Markerpunkte ist, und der zweite Punktwolkenfehler die Summe von Abständen zwischen dem tertiären Registrierungsmodell und Punkten ist, die erhalten werden, nachdem Punkte des tatsächlichen Beckens einer tertiären Registrierungsmatrixtransformation unterzogen wurden; und
Bestimmen der optimierten Registrierungsmatrix gemäß der ersten Abweichung und der zweiten Abweichung, wobei die optimierte Registrierungsmatrix eine Registrierungsmatrix ist, die einer kleinsten der ersten Abweichung und der zweiten Abweichung entspricht.

7. Vorrichtung zur Beckenregistrierung, umfassend:
eine erste Verarbeitungseinheit, die konfiguriert ist zum Ausführen eines primären Registrierungsschritts des Registrierens eines dreidimensionalen Modells eines Beckens mit einem tatsächlichen Becken gemäß M ersten Markerpunkten, um ein primäres Registrierungsmodell und eine primäre Registrierungsmatrix zu erhalten, wobei der erste Markerpunkt ein beliebiger Punkt des Beckens ist, mindestens drei erste Markerpunkte nicht auf derselben geraden Linie liegen und M ≥ 3;
eine zweite Verarbeitungseinheit, die konfiguriert ist zum Ausführen eines sekundären Registrierungsschritts des Registrierens des primären Registrierungsmodells mit dem tatsächlichen Becken gemäß N zweiten Markerpunkten, um ein sekundäres Registrierungsmodell und eine sekundäre Registrierungsmatrix zu erhalten, wobei der zweite Markerpunkt ein beliebiger Punkt des Beckens ist und N ≥ M;
eine dritte Verarbeitungseinheit, die konfiguriert ist zum Ausführen eines Punktlöschungsschritts des Löschens zweiter Markerpunkte mit ersten Registrierungsfehlern, die größer als ein Fehlerschwellenwert sind, und Bestimmen verbleibender zweiter Markerpunkte als dritte Markerpunkte, wobei der erste Registrierungsfehler eine Wurzel des mittleren quadratischen Fehlers eines ersten Abstands und eines zweiten Abstands ist, der erste Abstand ein Abstand zwischen dem zweiten Markerpunkt und einem vorbestimmten Punkt ist, und der zweite Abstand ein Abstand zwischen einem entsprechenden Punkt des zweiten Markerpunkts in dem sekundären Registrierungsmodell und einem entsprechenden Punkt des vorbestimmten Punkts in dem sekundären Registrierungsmodell ist, der vorbestimmte Punkt ein anderer zweiter Markerpunkt ist, der einem zweiten Zielmarkerpunkt am nächsten ist, der zweite Zielmarkerpunkt ein beliebiger der zweiten Markerpunkte ist;
eine vierte Verarbeitungseinheit, die konfiguriert ist zum Ausführen eines tertiären Registrierungsschritts des Registrierens des primären Registrierungsmodells mit dem tatsächlichen Becken gemäß der Vielzahl von dritten Markerpunkten, um ein tertiäres Registrierungsmodell und eine tertiäre Registrierungsmatrix zu erhalten;
eine erste Bestimmungseinheit, die konfiguriert ist zum Ausführen eines ersten Bestimmungsschritts des Bestimmens einer optimierten Registrierungsmatrix gemäß einem Mittelwert von ersten Registrierungsfehlern und einem Mittelwert von zweiten Registrierungsfehlern, wobei die optimierte Registrierungsmatrix eine Registrierungsmatrix ist, die einem kleinsten des Mittelwerts der ersten Registrierungsfehler und des Mittelwerts der zweiten Registrierungsfehler entspricht, der zweite Registrierungsfehler eine Wurzel des mittleren quadratischen Fehlers des ersten Abstands und eines dritten Abstands ist, und der dritte Abstand ein Abstand zwischen einem entsprechenden Punkt des zweiten Markerpunkts in dem tertiären Registrierungsmodell und einem entsprechenden Punkt des vorbestimmten Punkts in dem tertiären Registrierungsmodell ist;
eine zweite Bestimmungseinheit, die konfiguriert ist, um einen zweiten Bestimmungsschritt des Bestimmens eines der optimierten Registrierungsmatrix entsprechenden Registrierungsmodells als ein optimiertes Registrierungsmodell auszuführen;
die erste Bestimmungseinheit schließt ein erstes Berechnungsmodul, ein zweites Berechnungsmodul und ein erstes Bestimmungsmodul ein; das erste Berechnungsmodul ist konfiguriert, um eine erste Registrierungsfehlermatrix durch einen Iterative-Closest-Point-Algorithmus zu erhalten, wobei die erste Registrierungsfehlermatrix N erste Registrierungsfehler einschließt, der vorbestimmte Punkt ein weiterer zweiter Markerpunkt ist, der dem zweiten Markerpunkt am nächsten liegt; das zweite Berechnungsmodul ist konfiguriert, um eine zweite Registrierungsfehlermatrix durch den Iterative-Closest-Point-Algorithmus zu erhalten, wobei die zweite Registrierungsfehlermatrix N zweite Registrierungsfehler einschließt; das erste Bestimmungsmodul ist konfiguriert zum Bestimmen einer optimierten Registrierungsfehlermatrix und der optimierten Registrierungsmatrix gemäß der ersten Registrierungsfehlermatrix und der zweiten Registrierungsfehlermatrix, wobei die optimierte Registrierungsfehlermatrix die erste Registrierungsfehlermatrix oder die zweite Registrierungsfehlermatrix ist, die einen minimalen Mittelwert von Matrixelementen aufweist, und die optimierte Registrierungsmatrix eine Registrierungsmatrix ist, die der optimierten Registrierungsfehlermatrix entspricht; und
die erste Bestimmungseinheit schließt ferner ein zweites Bestimmungsmodul und ein erstes Verarbeitungsmodul ein; das zweite Bestimmungsmodul ist konfiguriert, um die erste Registrierungsfehlermatrix oder die zweite Registrierungsfehlermatrix, die einen minimalen Mittelwert von Matrixelementen aufweist, als die optimierte Registrierungsfehlermatrix zu bestimmen, in Fällen, in denen alle ersten Zieldifferenzen kleiner oder gleich einem Differenzschwellenwert sind und alle zweiten Registrierungsfehler, die den dritten Markerpunkten entsprechen, kleiner oder gleich einem Fehlerschwellenwert sind, und die sekundäre Registrierungsmatrix oder die tertiäre Registrierungsmatrix, die der optimierten Registrierungsfehlermatrix entspricht, als die optimierte Registrierungsmatrix zu bestimmen, wobei die erste Zieldifferenz eine Differenz zwischen dem zweiten Registrierungsfehler, der dem dritten Markerpunkt entspricht, und dem zweiten Registrierungsfehler, der dem gelöschten zweiten Markerpunkt entspricht, ist; das erste Verarbeitungsmodul ist konfiguriert, um alle dritten Markerpunkte mit Differenzen, die größer als der Differenzschwellenwert sind, und alle dritten Markerpunkte mit zweiten Registrierungsfehlern, die größer als der Fehlerschwellenwert sind, in mindestens einem der Fälle zu löschen, in denen eine beliebige erste Zieldifferenz größer als der Differenzschwellenwert ist und der zweite Registrierungsfehler, der einem beliebigen dritten Markerpunkt entspricht, größer als ein Fehlerschwellenwert ist, verbleibende dritte Markerpunkte als X-te Markerpunkte zu bestimmen, wobei X größer als 3 ist, das primäre Registrierungsmodell mit dem tatsächlichen Becken gemäß dem X-ten Markerpunkt erneut zu registrieren, um ein X-äres Registrierungsmodell und eine X-äre Registrierungsmatrix zu erhalten, eine Berechnung durch den Iterative-Closest-Point-Algorithmus auszuführen, um eine (X-1)-te Registrierungsfehlermatrix zu erhalten, wobei der (X-1)-te Registrierungsfehlermatrix eine Vielzahl von (X-1)-ten Registrierungsfehlern einschließt, der (X-1)-te Registrierungsfehler eine Wurzel des mittleren quadratischen Fehlers eines (2X-3)-ten Abstands und eines (2X-2)-ten Abstands ist, der (2X-3)-te Abstand ein Abstand zwischen dem X-ten Markerpunkt und einem (X-1)-ten vorbestimmten Punkt ist, und der (2X-2)-te Abstand ein Abstand zwischen einem entsprechenden Punkt des X-ten Markerpunkts in dem X-ären Registrierungsmodell und einem entsprechenden Punkt des (X-1)-ten vorbestimmten Punkts in dem X-ären Registrierungsmodell ist, Wiederholen des Punktlöschungsschritts und des tertiären Registrierungsschritts, bis ein erster Fall oder ein zweiter Fall eintritt, wobei der erste Fall ist, dass alle zweiten Zieldifferenzen kleiner als oder gleich dem Differenzschwellenwert sind und alle (X-1)-ten Registrierungsfehler kleiner als oder gleich dem Fehlerschwellenwert sind, und der zweite Fall ist, dass die Anzahl aller gelöschten Punkte größer oder gleich einer vorbestimmten Menge sind, Bestimmen der ersten Registrierungsfehlermatrix, der zweiten Registrierungsfehlermatrix oder einer von (X-1)-ten Registrierungsfehlermatrizen, die einen minimalen Mittelwert von Matrixelementen aufweist, als die optimierte Registrierungsfehlermatrix, und Bestimmen der sekundären Registrierungsmatrix, der tertiären Registrierungsmatrix oder einer von X-ären Registrierungsmatrizen, die der optimierten Registrierungsfehlermatrix entspricht, als die optimierte Registrierungsmatrix, wobei die zweite Zieldifferenz eine Differenz zwischen dem X-ten Registrierungsfehler, der dem (X-1)-ten Markerpunkt entspricht, und einem (X-2)-ten Registrierungsfehler, der dem (X-1)-ten gelöschten Markerpunkt entspricht, ist.

8. Computerlesbares Speichermedium, umfassend ein gespeichertes Programm, wobei das Programm das Verfahren nach einem der Ansprüche 1 bis 6 ausführt.

9. Prozessor, der konfiguriert ist, um ein Programm auszuführen, wobei das Programm bei Ausführung das Verfahren nach einem der Ansprüche 1 bis 6 ausführt.

## Revendications

1. Procédé de recalage de bassin exécuté par un processeur, comprenant :
l'exécution d'une étape de recalage primaire consistant à recaler un modèle tridimensionnel d'un bassin avec un bassin réel selon M premiers points de repère pour obtenir un modèle de recalage primaire et une matrice de recalage primaire, dans lequel le premier point de repère est un point quelconque du bassin, au moins trois premiers points de repère ne sont pas situés sur la même ligne droite, et M ≥ 3 ;
l'exécution d'une étape de recalage secondaire consistant à recaler le modèle de recalage primaire avec le bassin réel selon N deuxièmes points de repère pour obtenir un modèle de recalage secondaire et une matrice de recalage secondaire, dans lequel le deuxième point de repère est un point quelconque du bassin, et N > M ;
l'exécution d'une étape de suppression de points consistant à supprimer des deuxièmes points de repère ayant des premières erreurs de recalage supérieures à un seuil d'erreur et à déterminer des deuxièmes points de repère restants en guise de troisièmes points de repère, dans lequel la première erreur de recalage est une erreur quadratique moyenne d'une première distance et d'une deuxième distance, la première distance est une distance entre le deuxième point de repère et un point prédéterminé, et la deuxième distance est une distance entre un point correspondant du deuxième point de repère dans le modèle de recalage secondaire et un point correspondant du point prédéterminé dans le modèle de recalage secondaire, le point prédéterminé est un autre deuxième point de repère le plus proche d'un deuxième point de repère cible, le deuxième point de repère cible est l'un quelconque des deuxièmes points de repère ;
l'exécution d'une étape de recalage tertiaire consistant à recaler le modèle de recalage primaire avec le bassin réel selon la pluralité de troisièmes points de repère pour obtenir un modèle de recalage tertiaire et une matrice de recalage tertiaire ;
l'exécution d'une première étape de détermination consistant à déterminer une matrice de recalage optimisée selon une moyenne de premières erreurs de recalage et une moyenne de deuxièmes erreurs de recalage, dans lequel la matrice de recalage optimisée est une matrice de recalage correspondant à la plus petite parmi la moyenne de premières erreurs de recalage et la moyenne de deuxièmes erreurs de recalage, la deuxième erreur de recalage est une erreur quadratique moyenne de la première distance et d'une troisième distance, et la troisième distance est une distance entre un point correspondant du deuxième point de repère dans le modèle de recalage tertiaire et un point correspondant du point prédéterminé dans le modèle de recalage tertiaire ;
l'exécution d'une deuxième étape de détermination consistant à déterminer un modèle de recalage correspondant à la matrice de recalage optimisée en guise de modèle de recalage optimisé ;
dans lequel la détermination d'une matrice de recalage optimisée selon une moyenne de premières erreurs de recalage et une moyenne de deuxièmes erreurs de recalage comprend :
l'obtention d'une première matrice d'erreurs de recalage par le biais d'un algorithme itératif du point le plus proche, dans lequel la première matrice d'erreurs de recalage comprend N premières erreurs de recalage, le point prédéterminé est un autre deuxième point de repère le plus proche du deuxième point de repère ;
l'obtention d'une deuxième matrice d'erreurs de recalage au moyen de l'algorithme itératif du point le plus proche, dans lequel la deuxième matrice d'erreurs de recalage comprend N deuxièmes erreurs de recalage ; et
la détermination d'une matrice d'erreurs de recalage optimisée et de la matrice de recalage optimisée selon la première matrice d'erreurs de recalage et la deuxième matrice d'erreurs de recalage, dans lequel la matrice d'erreurs de recalage optimisée est la première matrice d'erreurs de recalage ou la deuxième matrice d'erreurs de recalage ayant une moyenne minimale d'éléments de matrice, et la matrice de recalage optimisée est une matrice de recalage correspondant à la matrice d'erreurs de recalage optimisée ;
dans lequel la détermination d'une matrice de recalage optimisée selon une moyenne de premières erreurs de recalage et une moyenne de deuxièmes erreurs de recalage comprend :
dans les cas où toutes les premières différences cibles sont inférieures ou égales à un seuil de différence et toutes les deuxièmes erreurs de recalage correspondant aux troisièmes points de repère sont inférieures ou égales à un seuil d'erreur, la détermination de la première matrice d'erreurs de recalage ou de la deuxième matrice d'erreurs de recalage qui a une moyenne minimale d'éléments de matrice en guise de matrice d'erreurs de recalage optimisée, et la détermination de la matrice de recalage secondaire ou de la matrice de recalage tertiaire qui correspond à la matrice d'erreurs de recalage optimisée en guise de matrice de recalage optimisée, dans lequel la première différence cible est une différence entre la deuxième erreur de recalage correspondant au troisième point de repère et la deuxième erreur de recalage correspondant au deuxième point de repère supprimé ; et
dans au moins un des cas où une quelconque première différence cible est supérieure au seuil de différence et la deuxième erreur de recalage correspondant à un quelconque troisième point de repère est supérieure à un seuil d'erreur, la suppression de tous les troisièmes points de repère ayant des différences supérieures au seuil de différence et de tous les troisièmes points de repère ayant des deuxièmes erreurs de recalage supérieures au seuil d'erreur, la détermination des troisièmes points de repère restants en guise de Xièmes points de repère, dans lequel X est supérieur à 3, le recalage à nouveau du modèle de recalage primaire avec le bassin réel selon le Xième point de repère pour obtenir un modèle de recalage X-aire et une matrice de recalage X-aire, l'exécution d'un calcul par le biais de l'algorithme itératif du point le plus proche pour obtenir une (X-1)ième matrice d'erreurs de recalage, dans lequel la (X-1)ième matrice d'erreurs de recalage comprend une pluralité de (X-1)ièmes erreurs de recalage, la (X-1)ième erreur de recalage est une erreur quadratique moyenne d'une (2X-3)ième distance et d'une (2X-2)ième distance, la (2X-3)ième distance est une distance entre le Xième point de repère et un (X-1)ième point prédéterminé, et la (2X-2)ième distance est une distance entre un point correspondant du Xième point de repère dans le modèle de recalage X-aire et un point correspondant du (X-1)ième point prédéterminé dans le modèle de recalage X-aire, la répétition de l'étape de suppression de points et de l'étape de recalage tertiaire jusqu'à ce qu'un premier cas ou un deuxième cas se produise, dans lequel le premier cas est que toutes les deuxièmes différences cibles sont inférieures ou égales au seuil de différence et que toutes les (X-1)ièmes erreurs de recalage sont inférieures ou égales au seuil d'erreur, et le second cas est que la quantité de tous les points supprimés est supérieure ou égale à une quantité prédéterminée, la détermination de la première matrice d'erreurs de recalage, de la deuxième matrice d'erreurs de recalage ou d'une des (X-1)ièmes matrices d'erreurs de recalage qui a une moyenne minimale d'éléments de matrice en guise de matrice d'erreurs de recalage optimisée, et la détermination de la matrice de recalage secondaire, de la matrice de recalage tertiaire ou d'une des matrices de recalage X-aires qui correspond à la matrice d'erreurs de recalage optimisée en guise de matrice de recalage optimisée, dans lequel la deuxième différence cible est une différence entre la Xième erreur de recalage correspondant au (X-1)ième point de repère et une (X-2)ième erreur de recalage correspondant au (X-1)ième point de repère supprimé.

2. Procédé selon la revendication 1, dans lequel après la détermination d'un modèle de recalage correspondant à la matrice de recalage optimisée en guise de modèle de recalage optimisé, le procédé comprend en outre :
la rotation du modèle de recalage optimisé autour d'un axe de rotation d'un angle prédéterminé pour obtenir un modèle de rotation, dans lequel l'angle prédéterminé est un angle quelconque de -180° à 180° ;
la mise à jour du modèle de recadrage primaire en le modèle de rotation ;
la répétition de l'étape de recalage secondaire, de l'étape de suppression de points, de l'étape de recalage tertiaire, de la première étape de détermination et de la deuxième étape de détermination pour obtenir une matrice d'erreurs de recalage optimisée et un modèle de recalage optimisé correspondant à l'angle prédéterminé ; et
la détermination d'un angle de rotation cible selon des matrices d'erreurs de recalage optimisées correspondant à une pluralité d'angles prédéterminés, dans lequel l'angle de rotation cible est l'angle prédéterminé correspondant à la matrice d'erreurs de recalage optimisée ayant une moyenne minimale d'éléments de matrice des matrices d'erreurs de recalage optimisées correspondant à la pluralité d'angles prédéterminés.

3. Procédé selon la revendication 2, dans lequel la détermination d'un angle de rotation cible selon des matrices d'erreurs de recalage optimisées correspondant à une pluralité d'angles prédéterminés comprend :
l'obtention de la matrice d'erreurs de recalage optimisée correspondant à - 180° et des matrices d'erreurs de recalage optimisées correspondant à une pluralité de premiers angles prédéterminés, et la détermination d'un angle préféré parmi -180° et les premiers angles prédéterminés qui correspond à la matrice d'erreurs de recalage optimisée ayant une moyenne minimale d'éléments de matrice, dans lequel les premiers angles prédéterminés sont espacés les uns des autres par un premier angle d'intervalle, une différence entre un premier angle prédéterminé minimal et -180° est inférieure ou égale au premier angle d'intervalle, et une différence entre 180° et un premier angle prédéterminé maximal est inférieure ou égale au premier angle d'intervalle ; et
la détermination de l'angle de rotation cible selon les matrices d'erreurs de recalage optimisées correspondant à un angle minimal, un angle maximal et une pluralité de deuxièmes angles prédéterminés espacés les uns des autres par un deuxième angle d'intervalle, dans lequel l'angle de rotation cible est le deuxième angle prédéterminé correspondant à la matrice d'erreurs de recalage optimisée ayant une moyenne minimale d'éléments de matrice des matrices d'erreurs de recalage optimisées correspondant à l'angle minimal, à l'angle maximal et au deuxième angle prédéterminé, le deuxième angle d'intervalle est inférieur au premier angle d'intervalle, l'angle minimal est une différence entre l'angle préféré et le premier angle d'intervalle, et l'angle maximal est la somme de l'angle préféré et du premier angle d'intervalle.

4. Procédé selon la revendication 3, dans lequel les axes de rotation comprennent une première ligne droite, une deuxième ligne droite et une troisième ligne droite, deux quelconques parmi la première ligne droite, la deuxième ligne droite et la troisième ligne droite sont perpendiculaires l'une par rapport à l'autre, et les axes de rotation correspondent aux angles de rotation cibles de manière biunivoque.

5. Procédé selon la revendication 4, dans lequel après la détermination de l'angle de rotation cible selon les matrices d'erreurs de recalage optimisées correspondant à un angle minimal, un angle maximal et une pluralité de deuxièmes angles prédéterminés espacés les uns des autres par un deuxième angle d'intervalle, le procédé comprend en outre :
la détermination de trois matrices de rotation selon trois angles de rotation cibles ;
la détermination de trois matrices de transformation de projection selon les trois matrices de rotation et d'une matrice de pose cible, dans lequel la matrice de pose cible est une matrice de pose d'un acétabulum lorsqu'une cupule acétabulaire est implantée lors d'une planification préopératoire ;
la mise à jour de la matrice de recalage secondaire en la matrice de transformation de projection ;
la répétition de l'étape de suppression de points, de l'étape de recalage tertiaire, de la première étape de détermination et de la deuxième étape de détermination pour obtenir trois matrices d'erreurs de recalage optimisées et trois modèles de recalage optimisés ; et
la détermination d'une matrice d'erreurs de recalage optimale et d'un modèle de recalage optimal selon les trois matrices d'erreurs de recalage optimisées et les trois modèles de recalage optimisés, dans lequel la matrice d'erreurs de recalage optimale est une matrice ayant une moyenne minimale d'éléments de matrice et une variance des éléments de matrice inférieure à un seuil de variance des trois matrices d'erreurs de recalage optimisées, et le modèle de recalage optimal est un modèle de recalage correspondant à la matrice d'erreurs de recalage optimisée.

6. Procédé selon la revendication 1, dans lequel la détermination d'une matrice de recalage optimisée selon une moyenne de premières erreurs de recalage et une moyenne de deuxièmes erreurs de recalage comprend :
l'établissement d'une fonction d'écart, dans lequel la fonction d'écart est utilisée pour calculer la somme d'une erreur de collecte et d'une erreur de nuage de points, l'erreur de collecte est la somme des erreurs de recalage des points de collecte, le point de collecte est l'un quelconque parmi le premier point de repère, le deuxième point de repère et le troisième point de repère, et l'erreur de nuage de points est la somme des distances entre le modèle de recalage et des points obtenus après que les points du bassin réel sont soumis à une transformation de matrice de recalage ;
le calcul d'un premier écart selon le modèle de recalage secondaire, la matrice de recalage secondaire et la fonction d'écart, dans lequel le premier écart est la somme d'une première erreur de collecte et d'une première erreur de nuage de points, la première erreur de collecte est la somme des premières erreurs de recalage des deuxièmes points de repère, et la première erreur de nuage de points est la somme des distances entre le modèle de recalage secondaire et des points obtenus après que des points du bassin réel sont soumis à une transformation de matrice de recalage secondaire ;
le calcul d'un deuxième écart selon le modèle de recalage tertiaire, la matrice de recalage tertiaire et la fonction d'écart, dans lequel le deuxième écart est la somme d'une deuxième erreur de collecte et d'une deuxième erreur de nuage de points, la deuxième erreur de collecte est la somme des deuxièmes erreurs de recalage des troisièmes points de repère, et la deuxième erreur de nuage de points est la somme des distances entre le modèle de recalage tertiaire et des points obtenus après que des points du bassin réel sont soumis à une transformation de matrice de recalage tertiaire ; et
la détermination de la matrice de recalage optimisée selon le premier écart et le deuxième écart, dans lequel la matrice de recalage optimisée est une matrice de recalage correspondant au plus petit parmi le premier écart et le deuxième écart.

7. Dispositif de repérage de bassin, comprenant :
une première unité de traitement configurée pour exécuter une étape de recalage primaire consistant à recaler un modèle tridimensionnel d'un bassin avec un bassin réel selon M premiers points de repère pour obtenir un modèle de recalage primaire et une matrice de recalage primaire, dans lequel le premier point de repère est un point quelconque du bassin, au moins trois premiers points de repère ne sont pas situés sur la même ligne droite, et M ≥ 3 ;
une deuxième unité de traitement configurée pour exécuter une étape de recalage secondaire consistant à recaler le modèle de recalage primaire avec le bassin réel selon N deuxièmes points de repère pour obtenir un modèle de recalage secondaire et une matrice de recalage secondaire, dans lequel le deuxième point de repère est un point quelconque du bassin, et N > M ;
une troisième unité de traitement configurée pour exécuter une étape de suppression de points consistant à supprimer des deuxièmes points de repère ayant des premières erreurs de recalage supérieures à un seuil d'erreur et à déterminer des deuxièmes points de repère restants en guise de troisièmes points de repère, dans lequel la première erreur de recalage est une erreur quadratique moyenne d'une première distance et d'une deuxième distance, la première distance est une distance entre le deuxième point de repère et un point prédéterminé, et la deuxième distance est une distance entre un point correspondant du deuxième point de repère dans le modèle de recalage secondaire et un point correspondant du point prédéterminé dans le modèle de recalage secondaire, le point prédéterminé est un autre deuxième point de repère le plus proche d'un deuxième point de repère cible, le deuxième point de repère cible est l'un quelconque des deuxièmes points de repère ;
une quatrième unité de traitement configurée pour exécuter une étape de recalage tertiaire consistant à recaler le modèle de recalage primaire avec le bassin réel selon la pluralité de troisièmes points de repère pour obtenir un modèle de recalage tertiaire et une matrice de recalage tertiaire ;
une première unité de détermination configurée pour exécuter une première étape de détermination consistant à déterminer une matrice de recalage optimisée selon une moyenne de premières erreurs de recalage et une moyenne de deuxièmes erreurs de recalage, dans lequel la matrice de recalage optimisée est une matrice de recalage correspondant à la plus petite parmi la moyenne de premières erreurs de recalage et la moyenne de deuxièmes erreurs de recalage, la deuxième erreur de recalage est une erreur quadratique moyenne de la première distance et d'une troisième distance, et la troisième distance est une distance entre un point correspondant du deuxième point de repère dans le modèle de recalage tertiaire et un point correspondant du point prédéterminé dans le modèle de recalage tertiaire ;
une seconde unité de détermination configurée pour exécuter une deuxième étape de détermination consistant à déterminer un modèle de recalage correspondant à la matrice de recalage optimisée en guise de modèle de recalage optimisé ;
la première unité de détermination comporte un premier module de calcul, un deuxième module de calcul et un premier module de détermination ; le premier module de calcul est configuré pour obtenir une première matrice d'erreurs de recalage par le biais d'un algorithme itératif du point le plus proche, où la première matrice d'erreurs de recalage comporte N premières erreurs de recalage, le point prédéterminé est un autre deuxième point de repère le plus proche du deuxième point de repère ; le deuxième module de calcul est configuré pour obtenir une deuxième matrice d'erreurs de recalage par le biais de l'algorithme itératif du point le plus proche, où la deuxième matrice d'erreurs de recalage comporte N deuxièmes erreurs de recalage ; le premier module de détermination est configuré pour déterminer une matrice d'erreurs de recalage optimisée et la matrice de recalage optimisée selon la première matrice d'erreurs de recalage et la deuxième matrice d'erreurs de recalage, dans lequel la matrice d'erreurs de recalage optimisée est la première matrice d'erreurs de recalage ou la deuxième matrice d'erreurs de recalage ayant une moyenne minimale d'éléments de matrice, et la matrice de recalage optimisée est une matrice de recalage correspondant à la matrice d'erreurs de recalage optimisée ; et
la première unité de détermination comporte en outre un deuxième module de détermination et un premier module de traitement ; le deuxième module de détermination est configuré pour déterminer la première matrice d'erreurs de recalage ou la deuxième matrice d'erreurs de recalage qui a une moyenne minimale d'éléments de matrice en guise de matrice d'erreurs de recalage optimisée, dans les cas où toutes les premières différences cibles sont inférieures ou égales à un seuil de différence et toutes les deuxièmes erreurs de recalage correspondant aux troisièmes points de repère sont inférieures ou égales à un seuil d'erreur, et déterminer la matrice de recalage secondaire ou la matrice de recalage tertiaire qui correspond à la matrice d'erreurs de recalage optimisée en guise de matrice de recalage optimisée, dans lequel la première différence cible est une différence entre la deuxième erreur de recalage correspondant au troisième point de repère et la deuxième erreur de recalage correspondant au deuxième point de repère supprimé ; le premier module de traitement est configuré pour supprimer tous les troisièmes points de repère ayant des différences supérieures au seuil de différence et tous les troisièmes points de repère ayant des deuxièmes erreurs de recalage supérieures au seuil d'erreur, dans au moins un des cas où une quelconque première différence cible est supérieure au seuil de différence et la deuxième erreur de recalage correspondant à un quelconque troisième point de repère est supérieure à un seuil d'erreur, déterminer les troisièmes points de repère restants en guise de Xièmes points de repère, dans lequel X est supérieur à 3, recaler à nouveau le modèle de recalage primaire avec le bassin réel selon le Xième point de repère pour obtenir un modèle de recalage X-aire et une matrice de recalage X-aire, exécuter un calcul par le biais de l'algorithme itératif du point le plus proche pour obtenir une (X-1)ième matrice d'erreurs de recalage, dans lequel la (X-1)ième matrice d'erreurs de recalage comporte une pluralité de (X-1)ièmes erreurs de recalage, la (X-1)ième erreur de recalage est une erreur quadratique moyenne d'une (2X-3)ième distance et d'une (2X-2)ième distance, la (2X-3)ième distance est une distance entre le Xième point de repère et un (X-1)ième point prédéterminé, et la (2X-2)ième distance est une distance entre un point correspondant du Xième point de repère dans le modèle de recalage X-aire et un point correspondant du (X-1)ième point prédéterminé dans le modèle de recalage X-aire, répéter l'étape de suppression de points et de l'étape de recalage tertiaire jusqu'à ce qu'un premier cas ou un deuxième cas se produise, dans lequel le premier cas est que toutes les deuxièmes différences cibles sont inférieures ou égales au seuil de différence et que toutes les (X-1)ièmes erreurs de recalage sont inférieures ou égales au seuil d'erreur, et le second cas est que la quantité de tous les points supprimés est supérieure ou égale à une quantité prédéterminée, déterminer la première matrice d'erreurs de recalage, de la deuxième matrice d'erreurs de recalage ou d'une des (X-1)ièmes matrices d'erreurs de recalage qui a une moyenne minimale d'éléments de matrice en guise de matrice d'erreurs de recalage optimisée, et déterminer la matrice de recalage secondaire, de la matrice de recalage tertiaire ou d'une des matrices de recalage X-aires qui correspond à la matrice d'erreurs de recalage optimisée en guise de matrice de recalage optimisée, dans lequel la deuxième différence cible est une différence entre la Xième erreur de recalage correspondant au (X-1)ième point de repère et une (X-2)ième erreur de recalage correspondant au (X-1)ième point de repère supprimé.

8. Support de stockage lisible par un ordinateur, comprenant un programme stocké, dans lequel le programme exécute le procédé selon l'une quelconque des revendications 1 à 6.

9. Processeur, configuré pour mettre en œuvre un programme, dans lequel le programme exécute le procédé selon l'une quelconque des revendications 1 à 6 lorsqu'il est mis en œuvre.
